# EUROPEAN PATENT APPLICATION

(11) **EP 3 401 555 A1**
(43) Date of publication of application: **14.11.2018**
(21) Application number: 18172134.1
(22) Date of filing: 14.05.2018
(51) Int. Cl.: F16B 12/16, F16B 12/24, F16B 12/46, A47B 88/90, F16B 12/26

(54) **IMPROVED PERPENDICULAR JOINT BETWEEN TWO PANELS**

(30) Priority: 12.05.2017 BE 201705355
(71) Applicant: Decruy nv, 8650 Houthulst (BE)
(72) Inventor: DECRUY, Frederik, 8650 Houthulst (BE); DECRUY, André, 8650 Merkem (BE)
(74) Representative: Chielens, Kristof

(57) **Abstract**

Joint between two panels which can be connected substantially perpendicular with respect to each other wherein at least one longitudinal end of the first panel (2) is provided with a drill hole (50) in which a dowel or insert (10) is elastically anchored or screwed and partly projects from this longitudinal end of which at least the portion which is situated outside the first panel (2) is partly or completely provided with a screw thread (15) and the second panel is provided with at least one drill hole (14) in the surface (V) onto which the first panel (2) is to be fitted at right angles wherein this drill hole (14) in the non-fitted position does not have a screw thread and both panels (2,3) can be connected to each other by positioning the insert or dowel (10) in the abovementioned drill hole (14) of the second panel (3) and subsequently rotating the two panels with respect to each other about the axis of the dowel (10), so that the screw thread (15) of the dowel (10) cuts a screw thread into the wall of the drill hole (14), as a result of which a joint is produced and, depending on the pitch (P) of the screw thread (15), the longitudinal end of the first panel (2) and the surface (V) of the second panel (3) come closer to each other, wherein the rotation will continue at least until the longitudinal end of the first panel (2) and the surface (V) of the second panel (3) are pushed against each other, so that there is a tensile stress (Ft) on the dowel (10) as a result of which the latter is pulled at least partly out of the drill hole (50) of the first panel (2) due to the elastic anchoring in the drill hole (50) of the first panel (2) and/or that the dowel (10) withdraws with respect to the already cut screw thread in the drill hole (14) of the second panel (3) on account of this tensile stress (Ft).

## Description

The present invention relates to a joint for furniture panels and the assembly of a drawer or drawer box in which the aforementioned joint is incorporated.

Several kinds of drawers and techniques to assemble drawers already exist. Thus, it is possible to distinguish between, on the one hand, the foldable ("folding") drawer and, on the other hand, the disassemblable drawers.

The folding drawer is a drawer in which the side walls, the rear wall and optionally also the front wall are made from one piece. Assembly will be effected by folding the various walls to form a box. The joint between these walls is often reinforced in the folded state by a glue or an adhesive. In a non-folded state, the various walls are only connected to each other by means of a stratiform covering. This stratiform covering is usually a plastic film. The base material of these drawers may be MDF, LDF, a chipboard, a wood-based sheet material or a plastic profile.

With a disassemblable drawer, the various components (side walls, the rear wall and the front wall) are separate from one another and may be coupled by means of coupling means. These coupling means may be incorporated in the panel or in the wall elements in the form of a click-fit system or coupling system, in which case this coupling system consists of a tongue and a groove in which both the tongue and the groove are provided with mating beards. On the other hand, these coupling means may also be external elements in the form of eccentric joints, wooden or plastic dowels optionally provided with beards and/or glue.

Each of the two types of drawers has its own specific advantages and drawbacks. Thus, the foldable drawer is often unwieldy and too large to fit into standard packaging, as all components are connected to each other. In addition, the joint in non-folded form tends to be fairly fragile, as the joint is usually only made of a plastic covering layer, as a result of which the joint may tear.

With the disassemblable drawers, walls are not connected to each other, but these have the drawback that this type of drawer is often more expensive than the foldable drawer, since the various components all have to be manufactured separately. In addition, the disassemblable drawers have the considerable drawback that many accessories are required to assemble the drawer.
This means that it is quite time-consuming for the fitter or consumer to, first of all, find all the required accessories and, second of all, to fit all accessories correctly in order to be able to carry out the assembly. After all, when someone buys "ready to assemble" or "flat-pack furniture", the packaging contains various small bags, causing many buyers to lose sight of which accessories go with which component. In addition, it is often the case that incorrect or too few components or accessories are included in the packaging and that these then have to be delivered subsequently, overall resulting in an expensive exercise.

Another drawback is the fact that, in many cases, cover caps or accessories are visible after assembly, which results in a less appealing appearance. Usually, these components are covered by means of a cover cap or the like, often in the colour of the decorative film. This makes the entire unit more expensive and is never as aesthetically pleasing as an embodiment or joint where these are absent and this measure therefore does not have to be taken.

It is therefore an object of the present invention to develop a disassemblable drawer which solves the abovementioned drawbacks. The object of the invention is achieved by providing a set as described in the independent claims.

Preferred embodiments are described in the dependent claims.

A first aspect of the present invention is to create a joint in which the drill hole does not require a screw thread. If a screw thread has to be produced by machine or a groove has to be milled, this increases manufacturing time and causes a significant increase in production costs.

In addition, many furniture producers have production lines to drill holes. If these lines have to be converted or investments have to be made in new production lines, this will again make the product more expensive.

As has already been indicated above, the base material of these furniture components which are to be joined is MDF or chipboard. These materials are partly layered. The layers extend in the longitudinal direction of the panel. This means that, if threading is desired, the grooves of the thread will be cut through the layers and thus result in a secure anchoring which is sufficiently strong to be able to withstand significant tensile forces. However, tests have also shown that it is also possible to cut a screw thread at right angles to the layers of chipboard or MDF panel.

A second aspect of the present invention is that the joint between the two panels is designed in such a manner that the tolerances in the panel, glue and the film of the two panels can be absorbed. A chipboard or an MDF panel has tolerances of +/-0.3 mm. In order to achieve a reliable joint, it is important that the longitudinal end of the first panel has been pulled against the surface of the second panel, so that no air gap is visible. To this end, a system has to be present in the joint which has the required elasticity to absorb these tensile forces.

The third aspect is that the joint has to be such that no additional accessories are required anymore. This means that no eccentric, coupling pieces, cover caps or the like should be required in order to produce the joint.
It is therefore important that all joining elements are already provided in the panels and that these are no longer visible after the panels have been assembled. This may be solved by using a threaded screw body. This will be explained in more detail in the description of the figures below.

### List of figures

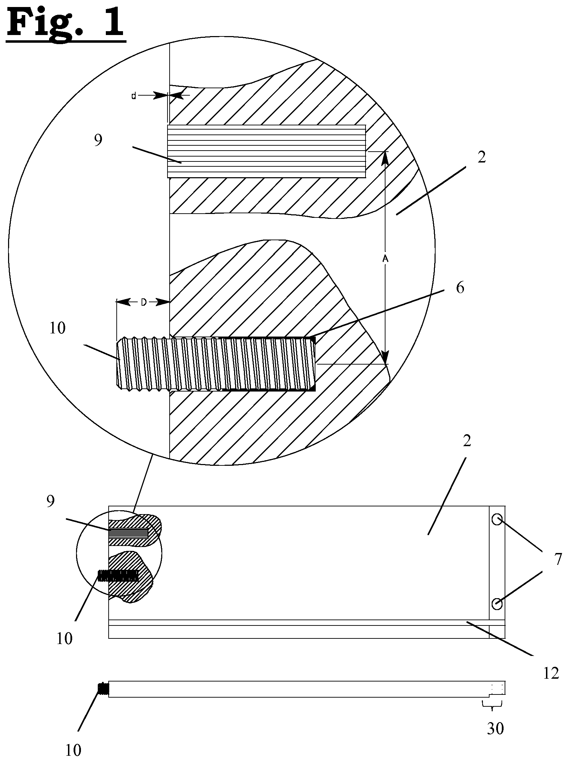

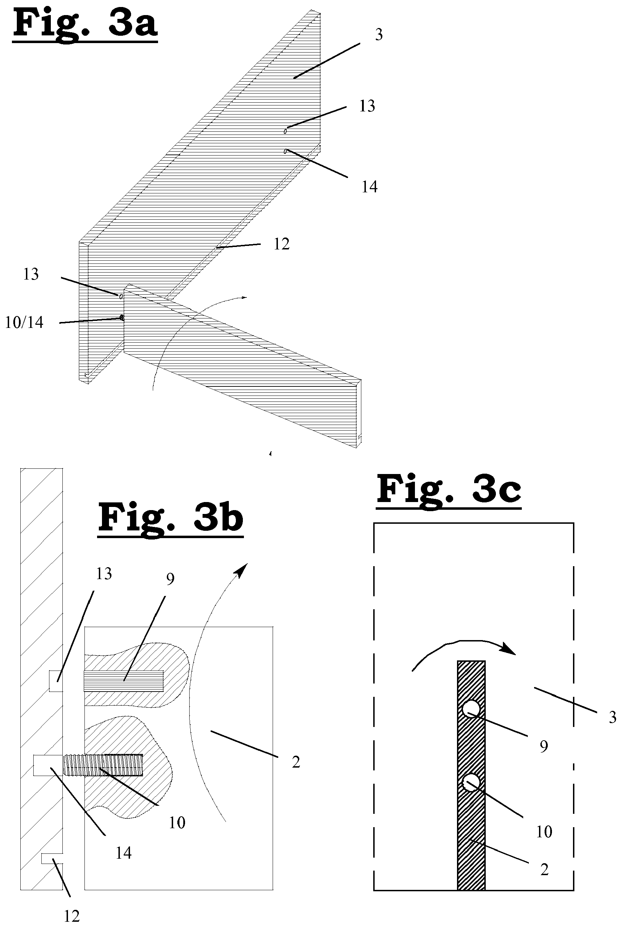

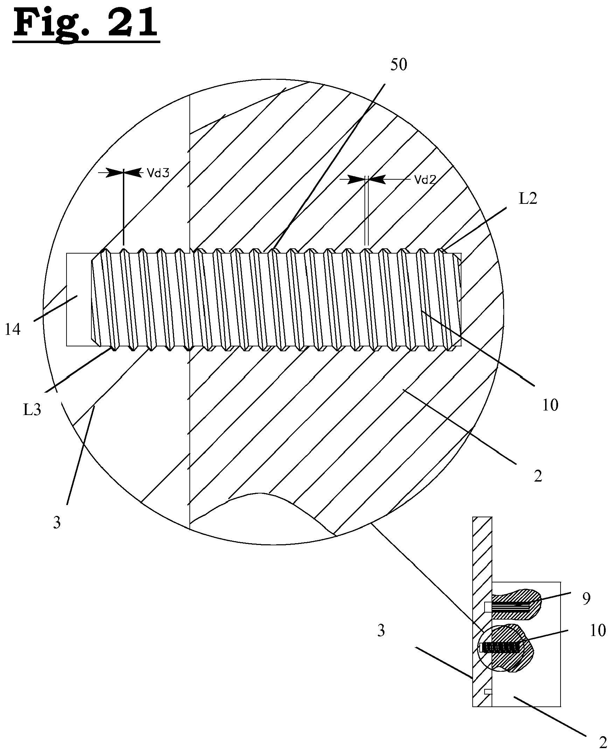

**Fig. 1****:** Furniture panel according to the invention. At one longitudinal end, the furniture panel (2) has two bodies. The first screw body (10) is provided with a screw thread and protrudes from the longitudinal end by a distance D. This distance D depends on the thickness of the second furniture panel in which this furniture panel (2) will be screwed or fitted, but also depends on the clamping force which has to be created between the first furniture panel (2) and the second furniture panel. The joint between these two furniture panels is a mainly perpendicular joint. The screw body (10) may be made of various materials, such as, inter alia, wood, PVC, plastic, synthetic material, a WPC, metal or a metal alloy. The screw body (10) is fixed in a hole in the longitudinal end. This may be effected by means of a glued joint (6), but may also be effected by means of heat-sealing or by means of a click-fit or clamping connection. If desired, the screw body (10) may also be screwed into the drill hole (50) of the first panel (2). Thus, there is no need for any adhesive (6). The first screw body (10) serves for fixation or attachment.
   The second body of dowel (9) is at a distance A from the first screw body (10). The two bodies are mainly parallel with respect to each other, but this is not imperative. This body (9) protrudes a distance d out of the longitudinal end. The purpose of this second body (9) is to position. In addition, this positioning body (9) may be fixed in the drill hole (51) by means of a glued joint, a clamping connection or a heat-sealed connection. However, it may also be the case that this dowel is not fixed, because this dowel does not serve for fixation, but more for positioning. It will also be clear that this positioning body (9) may contain beards which, in the fitted position, may help the first screw body (10) to fix the two panels (2 and 3).
   It will also be clear that, in order to produce the joint according to the invention, only the first screw body (10) is required. The second dowel or positioning body (9) is an aid to help the fitter to bring the connection or assembly of the two panels to a good end. However, without a positioning dowel (9) or positioning mechanism, the fitter can continue to rotate the two panels with respect to each other, despite increasing tension, as a result of which the entire screw thread of the first panel (2) and/or of the second panel (3) will or may be destroyed by pulling. The positioning mechanism (9), either in the form of a dowel (9) or something else, is intended to remedy this by ensuring that as soon as both panels reach their end position with respect to each other, the rotary movement is stopped or blocked.
   Furthermore, the furniture panel (2) may also have various holes (7) and positioning grooves (30) and/or grooves (12) for fastening to the base or back. The furniture panel may be composed of chipboard, MDF or another wood-based panel/profile, plastic or metal base material and is often covered with a decorative film consisting of a plastic, a paper film or varnish.

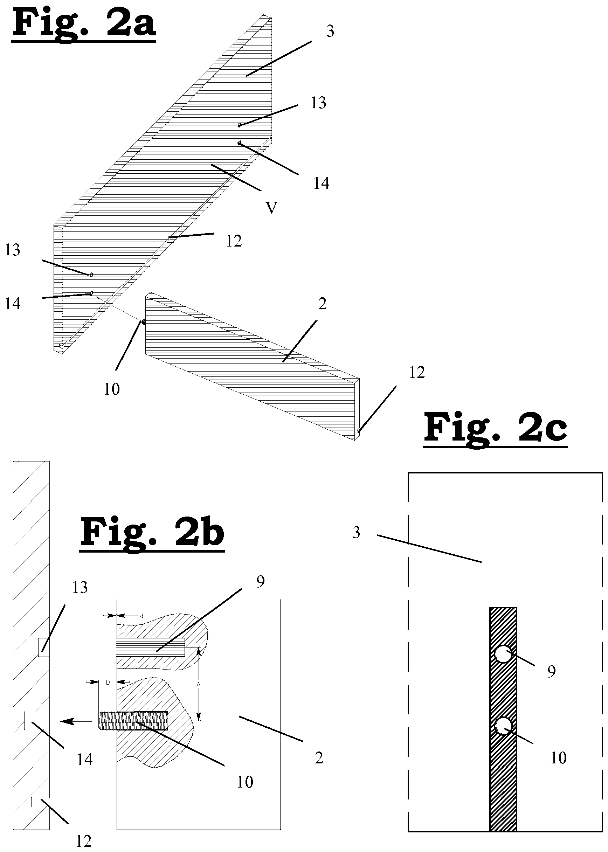

**Fig. 2a****:** Two furniture panels comprising a joint according to the invention; the first panel (2) contains coupling means at a longitudinal end. The coupling means consist of at least one screw body (10) which is provided with a screw thread. This screw thread may be a right-hand or a left-hand thread, depending on the desired fixing method. The screw body (10) is fixedly anchored in a drill hole which has been drilled in the longitudinal end of the panel (2) and protrudes by a distance D from the longitudinal end of the first panel (2). At a distance (A) from the first screw body (10), a second body (9) may also be present. This body (9) serves for positioning and often has no screw thread or anchoring. It will be clear that coupling means may however be provided on this second positioning body (9), but essentially this is not obligatory in order to fulfil the positioning function. The second panel (3) is mainly perpendicular with respect to the first panel. This panel contains one or more drill holes in the surface. One hole (14) is necessary in order to be able to receive the threaded dowel (10). A second hole (13) may serve for receiving the positioning dowel (9). However, this positioning is not always required, so that one drill hole (10) is often already sufficient.
   These drill holes (14) and (13) are not threaded, as they have only been drilled. It should, however, be understood that one or both holes may be provided with a screw thread. Anchoring will be achieved by screwing the screw body (10) into the drill hole (14) by means of a rotary movement about the axis of the screw body (10). As a result thereof, the screw thread (15) will cut a thread into the wall of the hole (10), resulting in a mainly perpendicular anchoring between both panels (see Figs. 3 to 8). Both panels may be composed of a core of chipboard, MDF panel, a wood-based panel, a plastic profile/panel or a metal profile/panel. Often, these profiles or panels are coated with a decorative layer consisting of a film or a varnish. The panels usually also contain a groove (12) in order to receive the base or the rear wall. It will also be clear that the side piece (2) may also start at another angle. The assembly system is sufficiently efficient to produce a reliable joint irrespective of the starting position, as will also be clear from the following figures.
**Fig. 2b****:** Side view of two panels comprising a joint according to the invention. The first panel (2) contains two bodies (10 and 9), the first dowel (10) being provided with a screw thread (15) and protruding a distance (D) from the longitudinal side of the first panel (2). The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first dowel (10). This distance (d) will be within a range of 0.1 to 3 mm. However, this distance may be much greater if a spring is provided in this positioning dowel/mechanism (9) which allows the positioning dowel (9) to be pushed into drill hole (51) in a completely elastic way.
   The second panel (3) is provided with various holes, with drill hole with reference numeral (14) serving to receive the first insert (10). This may be anchored in this drill hole (14) by means of a rotating movement due to the fact that the screw thread (15) cuts a thread into the wall of drill hole (14) while being rotated in. The drill hole with reference numeral (13) serves to receive the second insert (9) and to determine the end position of the drawer, so that the panel (2) cannot rotate endlessly in drill hole (14) as a result of which the newly cut screw thread would become damaged and the joint would thus be destroyed.
   The second panel also contains a groove (12) to receive the rear wall or the drawer bottom. Both the first panel (2) and the second panel (3) may contain several holes for attaching and/or positioning certain components, such as guides, doors, hinges, legs...
**Fig. 2c****:** Rear view of the joint according to the invention. The first panel is in the starting position for producing the joint. After all, the insert (10) (also referred to as screw body) has to be placed in the drill hole (14), after which the dowel (10) cuts a screw thread into the wall of drill hole (14) by means of a rotating movement. It will also be clear that the side piece (2) may also start at another angle. The assembly system is sufficiently efficient to produce a reliable joint irrespective of the starting position, as will also be clear from the following figures. In Fig. 2c, no groove (12) is provided in the front (3) and/or in the side pieces (1,2); however, it will also be clear that this does not affect the assembly or the fastening system of the present invention.
**Fig. 3a****:** Two furniture panels comprising a joint according to the invention; the first panel (2) contains coupling means at a longitudinal end. The coupling means consist of at least one dowel or insert (10) which is provided with a screw thread. This screw thread may be a right-hand or a left-hand thread, depending on the desired fixing method. The positioning dowel (10) is fixedly anchored in a drill hole in the longitudinal end of the panel (2) and protrudes a distance D from the longitudinal end of panel (2). At a distance (A) from the first insert (10), a second insert (9) may also be present. This insert (9) serves for positioning and often has no screw thread or anchoring. It will be clear that coupling means may however be provided with this second dowel (9), but essentially this is not obligatory in order to fulfil the positioning function. The second panel (3) is mainly perpendicular with respect to the first panel. This panel contains one or more drill holes in the surface. One drill hole (14) is necessary in order to be able to receive the threaded dowel (10). A second drill hole (13) may serve for receiving the positioning dowel (9). However, this positioning is not always required, so that one drill hole (10) is often already sufficient. These drill holes (14) and (13) are not threaded, as they have only been drilled. Anchoring will be achieved by screwing the screw body (10) into the drill hole (14) and/or into the drill hole (50) by means of a rotary movement. As a result thereof, the screw thread (15) will cut a thread into the wall of the drill hole (10), resulting in a mainly perpendicular anchoring between both panels (see Figs. 3 to 8). Both panels may be composed of a core of chipboard, MDF panel, a wood-based panel, a plastic profile or a metal profile. Often, these profiles or panels are coated with a decorative layer consisting of a film or a varnish. The panels usually also contain a groove (12) in order to receive the base or the rear wall.
   The panel (2) is in the starting position in order for the screwing of the screw body (10) into drill hole (14) to start. This will result in a coupling between the first panel (2) and the second panel (13).
**Fig. 3b****:** Side view of two panels comprising a joint according to the invention. The first panel (2) contains two inserts or dowels (10 and 9), the first screw body (10) being provided with a screw thread and protruding a distance (D) from the longitudinal end. The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first dowel (10). This distance (d) will be within a range of 0.1 to 3 mm.
   The second panel (3) is provided with various holes, with the drill hole (14) serving for receiving the first insert (10). This may be anchored in this drill hole (14) by means of a rotating movement due to the fact that the screw thread cuts a thread into the wall of drill hole (14) while being screwed in. Drill hole (13) serves to receive the second positioning dowel (9) and to determine the end position of the drawer, so that the panel (2) cannot be rotated endlessly in drill hole (14) as a result of which the newly cut screw thread would become damaged and the joint would thus be destroyed.
   The second panel also contains a groove (12) for receiving the rear wall or the drawer bottom. Both the first panel (2) and the second panel (3) may also have several holes for attaching and/or positioning certain components, such as guides, doors, hinges, legs, ...
   The panel (2) is in the starting position in order for the screwing of the dowel (10) into drill hole (14) to start. This will result in a coupling between the first panel (2) and the second panel (13).
**Fig. 3c****:** Rear view of the joint according to the invention. The first panel is in the starting position for producing the joint. After all, the first screw body (10) has to be placed in the drill hole (14), after which the screw body (10) cuts a screw thread into the wall of drill hole (14) by means of a rotating movement about the axis of the screw body (10). It will also be clear that the side piece (1) may also start at another angle. The assembly system is sufficiently efficient to produce a reliable joint irrespective of the starting position, as will also be clear from the following figures. In Fig. 3c, no groove (12) is provided in the front (3) and/or in the side pieces (1, 2); however, it will also be clear that this does not affect the assembly or the fastening system of the present invention.

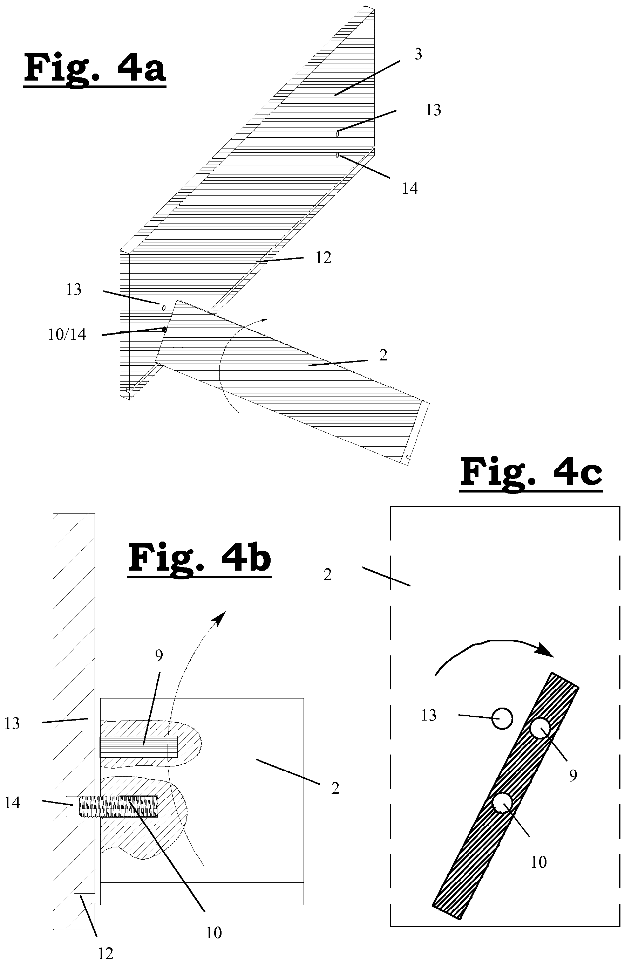

**Fig. 4a****:** Two furniture panels comprising a joint according to the invention; the first panel (2) contains coupling means at a longitudinal end. The coupling means consists of at least one dowel, body or insert (10) which has a screw thread. This screw thread (15) may be a right-hand or a left-hand thread, depending on the desired fixing method. The insert (10) is fixedly anchored in a drill hole in the longitudinal end of the panel (2) and protrudes a distance D from the longitudinal end of the first panel (2). At a distance (A) from the first body (10), a second body (9) may also be present. This bpdy (9) serves for positioning and often has no screw thread or anchoring. It will be clear that coupling means may however be provided with this second positioning body (9), but essentially this is not obligatory in order to fulfil the positioning function. It will also be clear that more than one positioning dowel may be provided. The second panel (3) is mainly perpendicular with respect to the first panel. This panel contains one or more drill holes in the surface. One drill hole (14) is necessary in order to be able to receive the threaded body (10). A second drill hole (13) may serve for receiving the positioning dowel (9). However, this positioning is not always required, so that one drill hole (10) is often already sufficient. These drill holes (14) and (13) are not threaded, as they have only been drilled. Anchoring will be achieved by screwing the insert (10) into the hole (14) by means of a rotary movement. As a result thereof, the screw thread (15) will cut a thread into the wall of the hole (10), resulting in a mainly perpendicular anchoring between both panels (see Figs. 3 to 8). Both panels may be composed of a core of chipboard, MDF panel, a wood-based panel, a plastic profile or a metal profile. Often, these profiles or panels are coated with a decorative layer consisting of a film or a varnish. The panels usually also contain a groove (12) in order to receive the base or the rear wall.
   A rotating movement of panel (2) with respect to panel (3) has been started, as a result of which the screw body (10) starts to cut a thread into the wall of drill hole (14). As a result thereof, panel (2) comes closer to panel (3). The speed at which the first panel (2) approaches panel (3) depends on the pitch of the screw thread which is on dowel (10). In this case, the rotating movement is right-handed because the thread on the dowel (10) is also right-handed, but this may also be a left-handed thread.
**Fig. 4b****:** Side view of two panels comprising a joint according to the invention. The first panel (2) contains two inserts, bodies or dowels (10 and 9), the first body (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first screw body (10). This distance (d) will be within a range of 0.1 to 4 mm. The distance (A) is often a multiple of 32 mm, because this is a standard size in the furniture industry.
   The second panel (3) is provided with various holes, with the drill hole (14) serving for receiving the first screw body (10). This may be anchored in this drill hole by means of a rotating movement of the first panel (2) about the axis of the screw body (10) due to the fact that the screw thread cuts a thread into the wall of drill hole (14) while being screwed in. Drill hole (13) serves to receive the second insert of positioning dowel (9) and to determine the end position of the drawer, so that the first panel (2) cannot be rotated endlessly in drill hole (14), as a result of which the newly cut screw thread would become damaged and the joint would thus be destroyed.
   The second panel also contains a groove (12) for receiving the rear wall or the drawer bottom. Both the first panel (2) and the second panel (3) may also have several drill holes or holes for attaching and/or positioning certain components, such as guides, doors, hinges, legs, ...
   A rotating movement of the first panel (2) with respect to the second panel (3) has been started, as a result of which the screw body (10) starts to cut a thread into the wall of drill hole (14). As a result thereof, panel (2) comes closer to panel (3). The speed at which the first panel (2) approaches panel (3) depends on the pitch (P) of the screw thread (15) which is on dowel (10).
**Fig. 4c****:** Rear view of the joint according to the invention. A rotating movement of the first panel (2) with respect to the second panel (3) has been started, as a result of which the screw body (10) starts to cut a thread into the wall of drill hole (14). As a result thereof, panel (2) comes closer to panel (3). The speed at which the first panel (2) approaches panel (3) depends on the pitch of the screw thread which is on dowel (10).

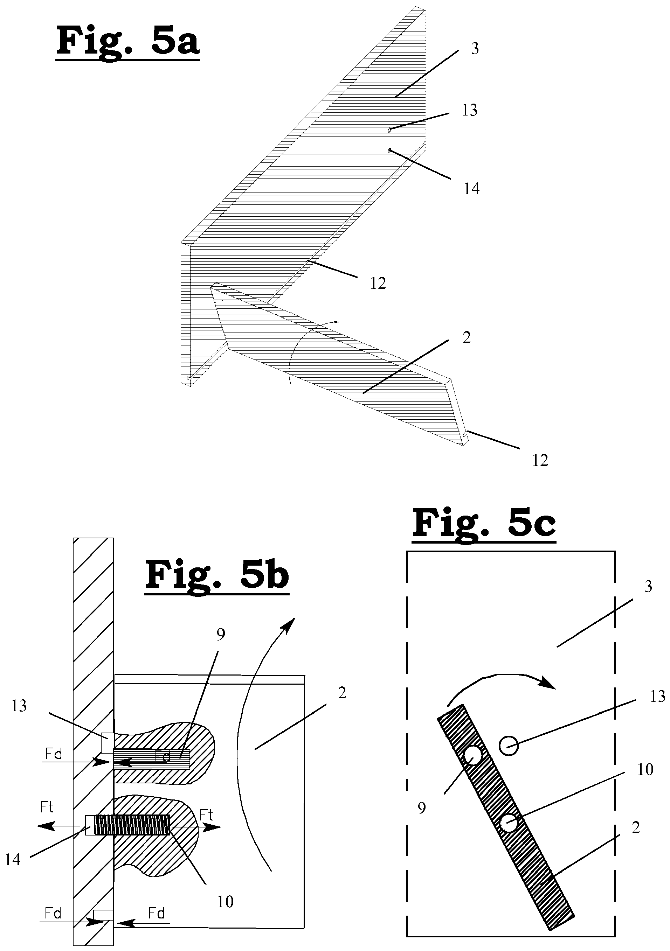

**Fig. 5a****:** Two furniture panels comprising a joint according to the invention. The first panel (2) contains coupling means at a longitudinal end. The coupling means consists of at least one dowel or insert (10) which has a screw thread. This screw thread may be a right-hand or a left-hand thread, depending on the desired fixing method. The insert (10) is fixedly anchored in a drill hole in the longitudinal end of the first panel (2) and protrudes a distance D from the longitudinal end (longitudinal edge) of the first panel (2). At a distance (A) from the first insert (10), a second insert (9) may also be present. This second insert (9) serves for positioning and often has no screw thread or anchoring. It will be clear that coupling means may however be provided with this second dowel (9), but essentially this is not obligatory in order to fulfil the positioning function. The second panel (3) is mainly perpendicular with respect to the first panel. This panel contains one or more drill holes in the surface. One drill hole (14) is necessary in order to be able to receive the threaded dowel (10). A second drill hole (13) may serve for receiving the positioning dowel (9). However, this positioning is not always required, so that one drill hole (10) is often already sufficient. These drill holes (14) and (13) are not threaded, as they have only been drilled. Anchoring will be achieved by screwing the insert (10) into the drill hole (14) by means of a rotary movement. As a result thereof, the screw thread will cut a thread into the wall of the hole (10), resulting in a mainly perpendicular anchoring between both panels (see Figs. 3 to 8). Both panels may be composed of a core of chipboard, MDF panel, a wood-based panel, a plastic profile or a metal profile. Often, these profiles or panels are coated with a decorative layer consisting of a film or a varnish. This film may be a PVC film, a plastic film, a paper film, a HPL or a CPL film. The panels usually also contain a groove (12) in order to receive the base or the rear wall.
   The rotary movement of the first panel (2) has almost reached its end point. This results in large stresses in the joint. Thus, there is a tensile stress Ft in the dowel (10) and a compression stress (Fd) on the bottom side of panel (2) and panel (3) and also a compression stress (Fd) on the positioning dowel (9) and the top side of the second panel (3) (at the location of the dowel (9)). These stresses will increase until the panel has reached its end point and the dowel (9) is received in drill hole (13). However, the stress will never be entirely neutralized, as it is necessary for an attractive and reliable joint that the longitudinal end of panel (2) has been pulled against the surface of panel (3) and remains there.
**Fig. 5b****:** Side view of two panels comprising a joint according to the invention. The first panel (2) contains two inserts or dowels (10 and 9), the first dowel (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first dowel (10). This distance (d) will be within a range of 0.1 to 3 mm.
   The second panel (3) is provided with various holes, with hole (14) serving for receiving the first insert (10). This may be anchored in this hole (14) by means of a rotating movement due to the fact that the screw thread cuts a thread into the wall of drill hole (14) while being screwed in. Drill hole (13) serves to receive the second insert (9) and to determine the end position of the drawer, so that the panel (2) can and/or will not be rotated endlessly in drill hole (14), as a result of which the newly cut screw thread would become damaged and the joint would thus be destroyed.
   The second panel also contains a groove (12) for receiving the rear wall or the drawer bottom. Both the first panel (2) and the second panel (3) may also have several holes for attaching and/or positioning certain components, such as guides, doors, hinges, legs, ...
   The rotary movement of panel (2) has almost reached its end point. This results in large stresses in the joint. Thus, there is a tensile stress Ft in the dowel (10) and a compression stress on the bottom side of the first panel (2) and second panel (3) and also a compression stress on the dowel (9) and the top side of panel (3) (at the location of the dowel (9)). If no positioning dowel (9) is present, the compression stress will be entirely applied between the surface (V) of the second panel (3) and the longitudinal end of the first panel (2). However, a tensile stress will always be applied on the dowel (10) which ensures that the two panels remain connected. These stresses will increase until the panel has reached its end point and dowel (9) is received in drill hole (13). However, the stress will never be entirely neutralized, as it is necessary for an attractive and reliable joint that the longitudinal end of panel (2) has been pulled against the surface of panel (3) and remains there. In order to create a stress between the first panel (2) and the second panel (3), it may be necessary to rotate the panels several times with respect to each other, depending on the pitch of the screw thread and the distance (D) by which the dowel (10) protrudes from the longitudinal end.
**Fig. 5c****:** Rear view of the joint according to the invention. A rotating movement of the first panel (2) with respect to the second panel (3) has been started, as a result of which the insert (10) starts to cut a thread into the wall of drill hole (14). As a result thereof, the first panel (2) comes closer to the second panel (3). The speed at which the first panel (2) approaches the second panel (3) depends on the pitch (p) of the screw thread which is on dowel (10). The rotary movement of the first panel (2) has almost reached its end point. This results in large stresses in the joint or dowel (10). Thus, there is a tensile stress Ft in the dowel (10) and a compression stress (Fd) on the bottom side of the first panel (2) and the second panel (3) and also a compression stress (Fd) on the dowel (9) and the top side of panel (3) (at the location of the dowel (9)). These stresses will increase until the first panel has reached its end point and dowel (9) is received in drill hole (13). However, the stress will never be entirely neutralized, as it is necessary for an attractive and reliable joint that the longitudinal end of the first panel (2) has been pulled against the surface of the second panel (3) and remains there.

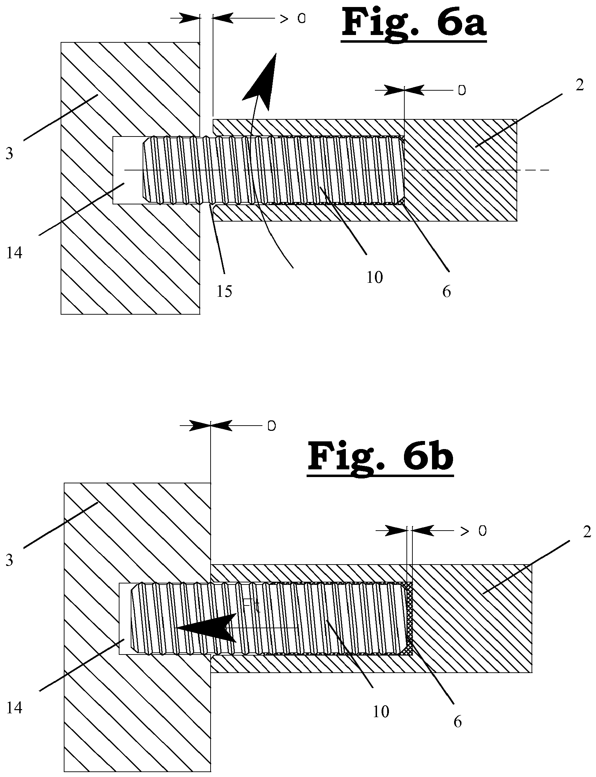

**Fig. 6a****:** Detail of an insert (10) according to the invention. The insert (10) is situated in a drill hole (50) in the longitudinal end of the panel (2). This insert (10) is anchored in this drill hole by means of an adhesive (6). The panel (2) is being rotated and the insert (10) cuts a screw thread into the wall of drill hole (14) so that an anchoring is created. The first panel (2) is still at a distance from the second panel (3), as a result of which this panel has still not reached its end point. The rear side of this dowel or insert (10) is situated entirely at the base of the drill hole. The drawing shows that the entry of the drill hole in the first panel (2) of the insert (10) is provided with a bevel. This serves for the sheet material and/or covering which is pushed out during cutting of the screw thread into the wall of the drill hole (14). In other words, it serves as a chamber or collecting space for excess material. This bevel or chamber could also be provided in the drill hole (14) in the second panel. This would then also aid assembly since the bevel assists positioning the insert (10) in the drill hole (14).

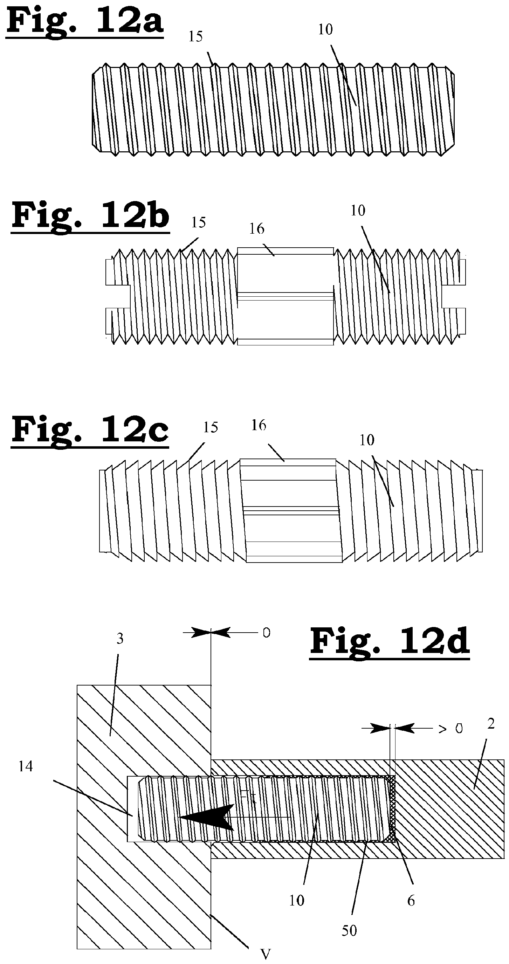

**Fig. 6b****:** Detail of an insert (10) according to the invention. The insert (10) is situated in a drill hole in the longitudinal end of panel (2). This insert (10) is anchored in this drill hole by means of an adhesive (6). The first panel (2) has been pulled against the second panel (3) and has reached its end point. As a result thereof, there is a tensile stress Ft in the dowel (10). Due to the fact that an elastic silicone has been used, this dowel will be pulled forward and a distance will be created between the rear side of the dowel (10) and the bottom of the drill hole. This largely absorbs the stress, as a result of which the joint will not break. After all, both the dowel (10) and the panels (2) and (3) are hard panels which can break, rupture or are compressible on account of excessive stress. The screw thread which has been cut into the wall of the drill hole (14), is very fine and often fragile, in particular in chipboard, as a result of which there is a considerable risk that it will break under excessive stress. Therefore, a way has to be found to absorb this stress and an elastic glue is an option in this case. It will also be clear that there are several other options, as discussed in, inter alia, Figs. 12 to 15.

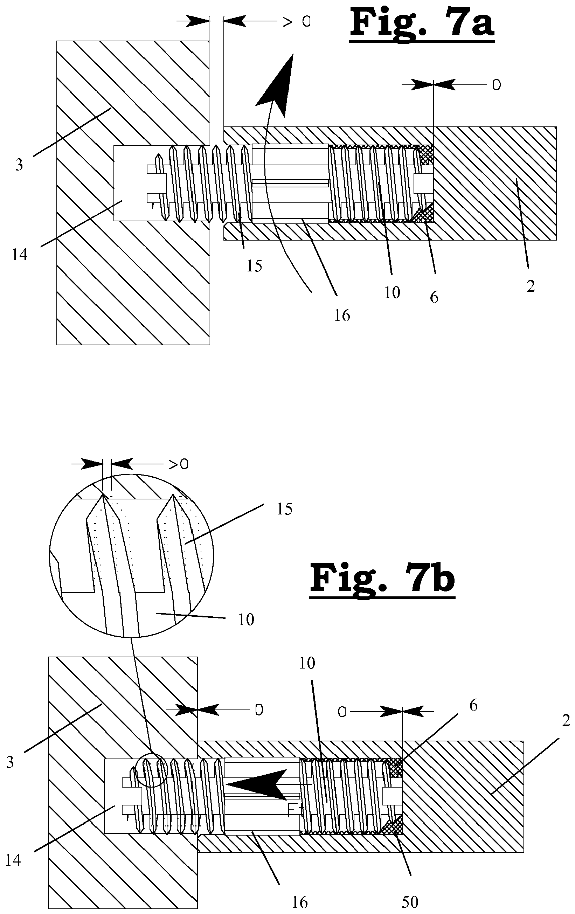

**Fig. 7a****:** Detail of an insert (10) according to the invention. The insert (10) is situated in a drill hole in the longitudinal end of the first panel (2). This insert (10) is anchored in this drill hole by means of an adhesive (6). The first panel (2) is being rotated and the insert (10) cuts a screw thread into drill hole (14) so that an anchoring is created. The first panel (2) is still at a distance (>0) from the second panel (3), as a result of which this panel has still not reached its end point.
   Rotation of the first panel (2) produces a very large torsional force between the dowel (10) and the wall of the drill hole, as a result of which the adhesive (6) is subjected to a large torsional force.
   The insert (10) is provided with a screw thread (15), whose blades or thread (15) is/are relatively long. Due to the fact that the blades (15) are relatively long, they are slightly elastic and are able to absorb certain stresses by bending.
**Fig. 7b****:** Detail of an insert (10) according to the invention. The insert (10) is situated in a drill hole in the longitudinal end of the first panel (2). This insert (10) is anchored in this drill hole by means of an adhesive (6). The first panel (2) has been pulled against the second panel (3) and has reached its end point. As a result thereof, there is tensile stress on the dowel (10).
   Due to the fact that the thread (15) of the screw thread is relatively high, it is slightly elastic and consequently absorbs a significant part of the torsional stress which is acting on the dowel (10). As a result thereof, the adhesive (6) is prevented from splitting. It is also important to use an adhesive (6) which has a degree of elasticity, so that it can absorb a degree of stress.

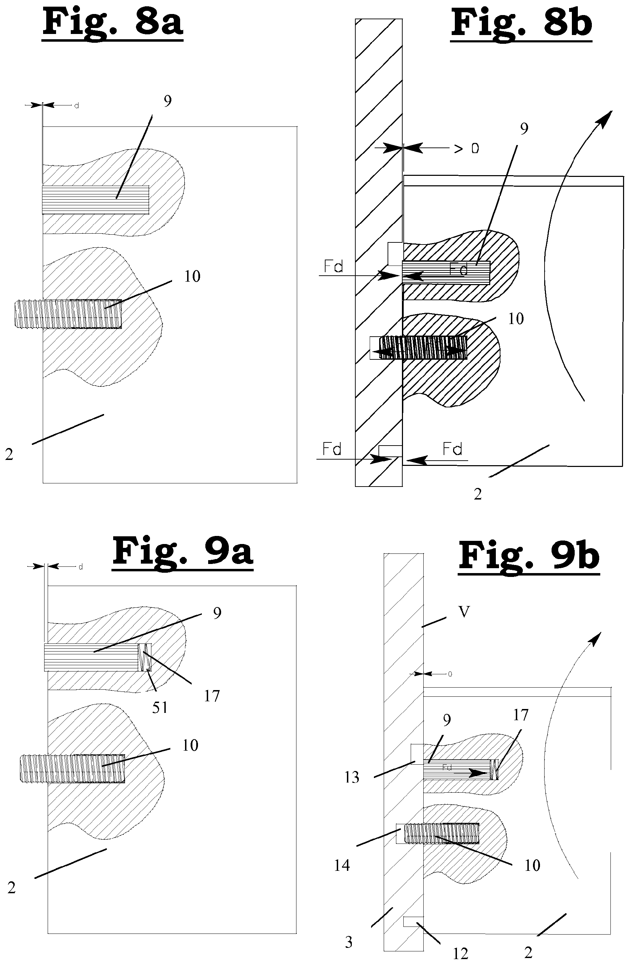

**Fig. 8a****:** Side view of a furniture panel (2) comprising a connecting means according to the invention. The first panel (2) contains two inserts or dowels (10 and 9), the first dowel (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal end of the side piece (2) of the first panel. This distance (d) is less long than distance (D) of the first dowel (10). This distance (d) will be within a range from 0.1 to 3 mm. The second insert (9) may be glued in the first furniture panel (2).
**Fig. 8b****:** Side view of two panels comprising a joint according to the invention. The first panel (2) contains two inserts or dowels (10 and 9), the first dowel (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal end of the side piece (2) or first panel. This distance (d) is less long than distance (D) of the first dowel (10). This distance (d) will be within a range from 0.1 to 3 mm. If desired, this distance (d) may be greater if this is combined with a spring system.
   The second panel (3) is provided with various holes, with hole (14) serving to receive the first insert (10). This may be anchored in this hole by means of a rotating movement due to the fact that the screw thread cuts a thread into the wall of drill hole (14) while being screwed in. Drill hole (13) serves to receive the second insert (9) and to determine the end position of the drawer, so that the panel (2) cannot rotate endlessly in drill hole (14) as a result of which the newly cut screw thread would become damaged and the joint would thus be destroyed.
   The second panel also contains a groove (12) to receive the rear wall or the drawer bottom. Both the first panel (2) and the second panel (3) may contain several holes for attaching and/or positioning certain components, such as guides, doors, hinges, legs... The rotary movement of panel (2) has almost reached its end point. This results in large stresses in the joint. Thus, there is a tensile stress Ft in the dowel (10) and a compression stress on the bottom side of panel (2) and panel (3) and also a compression stress on the dowel (9) and the top side of panel (3) (at the location of the dowel (9)). These stresses will increase until the panel has reached its end point and the dowel (9) is received in drill hole (13). However, the stress will never be entirely neutralized, as it is necessary for an attractive and reliable joint that the longitudinal end of panel (2) has been pulled against the surface (V) of the second panel (3) and remains there. In order to create a stress between the first panel (2) and the second panel (3), it may be necessary to rotate the panels several times with respect to each other, depending on the pitch of the screw thread and the distance (D) by which the dowel (10) protrudes from the longitudinal end of furniture panel (2).
   In certain cases, this tensile stress and compression stress may be very high, as a result of which the joint may be difficult to install. In addition, these stresses may cause scratches or damage to the panels. This stress could be reduced by optionally making the dowel (9) elastic (see Figs. 9a and 9b).
**Fig. 9a****:** Side view of a furniture panel (2) comprising a connecting means according to the invention. The first panel (2) contains two inserts or dowels (10 and 9), the first dowel (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first dowel (10). This distance (d) will be within a range from 0.1 to 3 mm.
   However, the difference with Fig. 9a is that the dowel (9) has a spring on the rear side which ensures that this dowel (9) is compressible. As a result thereof, the tensile and compression stresses which occur when connecting panel (2) and panel (3) by rotation will be reduced, thus also reducing the risk of damage.
**Fig. 9b****:** Side view of two panels comprising a joint according to the invention. The rotary movement of the first panel (2) has almost reached its end point. This results in large stresses in the joint. Thus, there is a tensile stress Ft in the dowel (10) and a compression stress on the bottom side of the first panel (2) and the second panel (3) and also a compression stress on the dowel (9) and the top side of panel (3) (at the location of the dowel (9)). These stresses will increase until the first panel has reached its end point and dowel (9) is received in the drill hole (13). However, the stress will never be entirely neutralized, as it is necessary for an attractive and reliable joint that the longitudinal end of panel (2) has been pulled against the surface of panel (3) and remains there. In order to create a stress between the first panel (2) and the second panel (3), it may be necessary to rotate the panels several times with respect to each other, depending on the pitch of the screw thread and the distance (D) by which the dowel (10) protrudes from the longitudinal end of furniture panel (2).
   In certain cases, this tensile stress and compression stress may be very high, as a result of which the joint may be difficult to install. In addition, these stresses may cause scratches or damage to the panels. This stress could be reduced by optionally making the dowel (9) elastic by providing a resilient means, such as e.g. a spring or elastic material (17), e.g. in or behind the dowel. It will be clear that such a flexibility may also be created in other ways, for example by making the dowel from an elastic material which is compressible or by making the top of the dowel (9) compressible.

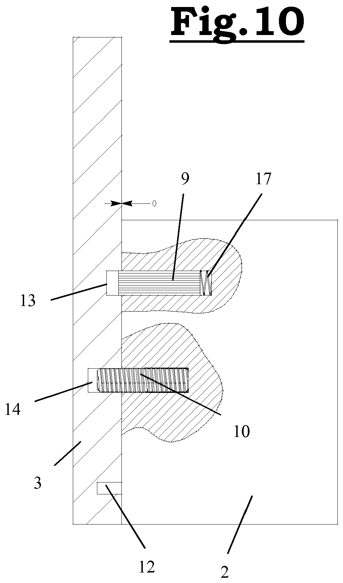

**Fig. 10****:** Side view of two panels comprising a joint according to the invention. The rotary movement of the first panel (2) has reached its end point. Drill hole (13) in the panel (3) has received the positioning dowel (9), as a result of which component (2) is more or less fixed, at least to the degree that the fitter has this impression, as a result of which he will not continue to rotate endlessly.
   In most cases, there is a tensile stress between the longitudinal end of the first panel (2) and the rear side of the second panel (3), so that the two panels (2 and 3) are pulled securely against each other and remain so.

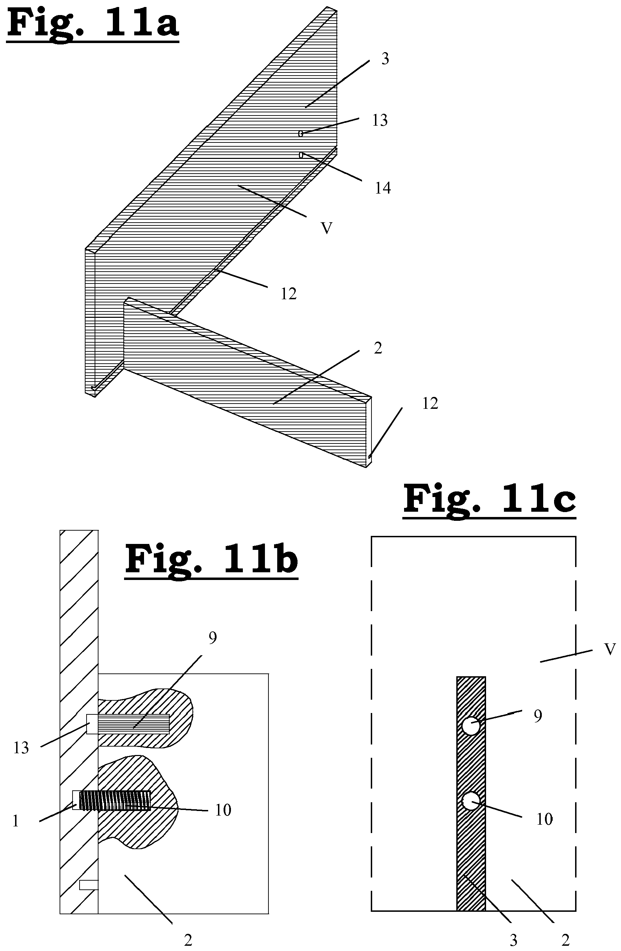

**Fig. 11a****:** Two furniture panels comprising a joint according to the invention; the first panel (2) contains coupling means at a longitudinal end. The coupling means consist of at least one dowel or insert (10) which is provided with a screw thread. This screw thread may be a right-hand or a left-hand thread, depending on the desired fixing method. The insert (10) is fixedly anchored in a drill hole in the longitudinal end of the panel (2) and protrudes a distance D from the longitudinal end of the first panel (2). At a distance (A) from the first insert (10), a second insert (9) may also be present. This insert (9) serves for positioning and often has no screw thread or anchoring. It will be clear that coupling means may however be provided with this second dowel (9), but essentially this is not obligatory in order to fulfil the positioning function. The second panel (3) is mainly perpendicular with respect to the first panel (2). This panel contains one or more drill holes in the surface. One drill hole (14) is necessary in order to be able to receive the threaded dowel (10). A second drill hole (13) may serve for receiving the positioning dowel (9). However, this positioning is not always required, so that one drill hole (10) is often already sufficient. These drill holes (14) and (13) are not threaded, as they have only been drilled. Anchoring will be achieved by screwing the insert (10) into the hole (14) by means of a rotary movement. Both panels may be composed of a core of chipboard, MDF panel, a wood-based panel, a plastic profile or a metal profile. Often, these profiles or panels are coated with a decorative layer consisting of a film or a varnish. The panels usually also contain a groove (12) in order to receive the base or the rear wall.
   The rotary movement of the first panel (2) has reached its end point. Drill hole (13) in the second panel (3) has received the positioning dowel (9), as a result of which component (2) is more or less fixed, at least to the degree that the fitter has this impression, as a result of which he will not continue to rotate endlessly.
   In most cases, there is a tensile stress between the longitudinal end of the first panel (2) and the rear side of the second panel (3), so that the two panels (2 and 3) are reliably pulled against each other and remain so.
**Fig. 11b****:** Side view of two panels comprising a joint according to the invention. The first panel (2) contains two inserts or dowels (10 and 9), with the first dowel (10) being provided with a screw thread and protruding a distance (D) from the longitudinal side. The second dowel (9) is at a distance (A) from the first dowel (10). This second dowel (9) contains no screw thread or coupling means and protrudes a distance (d) from the longitudinal side of the side piece (2). This distance (d) is less long than distance (D) of the first dowel (10). This distance (d) will be within a range from 0.1 to 3 mm.
   The second panel (3) is provided with various holes, with hole (14) serving to receive the first insert (10). This may be anchored in this hole by means of a rotating movement due to the fact that the screw thread cuts a thread into the wall of drill hole (14) while being screwed in. Drill hole (13) serves to receive the second insert (9) and to determine the end position of the drawer, so that the panel (2) cannot rotate endlessly in hole (14) as a result of which the newly cut screw thread would become damaged and the joint would thus be destroyed.
   The second panel also contains a groove (12) to receive the rear wall or the drawer bottom. Both the first panel (2) and the second panel (3) may contain several holes for attaching and/or positioning certain components, such as guides, doors, hinges, legs... The rotary movement of the first panel (2) has reached its end point. Drill hole (13) in the second panel (3) has received the positioning dowel (9), as a result of which the first panel (2) is more or less fixed, at least to the degree that the fitter has this impression, as a result of which he will not continue to rotate endlessly.
   In most cases, there is a tensile stress between the longitudinal end of the first panel (2) and the rear side of the second panel (3), so that the two panels (2 and 3) are reliably pulled against each other and remain so.
**Fig. 11c****:** Rear view of the joint according to the invention. Drill hole (13) in the second panel (3) has received the positioning dowel (9), as a result of which the first panel (2) is more or less fixed, at least to the degree that the fitter has this impression, as a result of which he will not continue to rotate endlessly.
   In most cases, there is a tensile stress between the longitudinal end of the first panel (2) and the rear side of the second panel (3), so that the two panels (2 and 3) are reliably pulled against each other and remain so.
**Fig. 12a****:** A dowel or insert (10) for producing a joint according to the invention. The insert (10) is provided with a screw thread (15). The outer diameter of the thread is Bd and the core diameter is Kd. In this version, the difference between the outer thread and the internal thread is rather small, as a result of which the height of the blades or the thread (15) is rather little and these are thus not elastic. The entire thread is a right-hand thread. It should be understood that this thread may also be a left-hand thread. Moreover, it is also possible to provide a left-hand thread on one half and to provide a right-hand thread on the other half. At the transition (O) from this left-hand to right-hand thread, a transition zone may be provided. As the thread is not elastic, use will have to be made of an elastic adhesive to stick this dowel in panel (2) so that this adhesive will be able to absorb any stresses.
**Fig. 12b****:** A dowel or insert (10) for producing a joint according to the invention. The insert (10) is provided with a screw thread (15). The outer diameter of the thread is Bd and the core diameter is Kd. In this version, the difference between the outer thread and the internal thread is rather small, as a result of which the height of the blades or the thread (15) is rather little and these are thus not elastic. The entire thread is a right-hand thread. It should be understood that this thread may also be a left-hand thread. Moreover, it is also possible to provide a left-hand thread on one half and to provide a right-hand thread on the other half. At the transition from the left-hand to right-hand half of the insert, a transition zone (O) is provided on which blades (16) are provided in the longitudinal direction of the dowel (10). These blades serve to prevent the dowel (10) from starting to rotate during fixing of the first panel (2) into the second panel (3) as significant rotary force is applied to the joint between the dowel and panel (2) during this rotation. Since the thread is not elastic, an elastic adhesive will have to be used to glue this dowel into the first panel (2), so that this adhesive is able to absorb any stresses. Compared to Fig. 12a, the thread has a smaller pitch (P). As a result thereof, the stress which occurs between the longitudinal end of the first panel (2) and the second panel (3) during installation will be reduced. The figure also shows that both ends of the dowel comprise a small portion without any screw thread, the diameter of which is equal to or smaller than the core diameter. The purpose thereof is to be able to easily position the dowel, which results in simpler and quicker installation. In addition, a groove is provided at the ends of the dowel (10) for receiving a screwdriver, as a result of which this dowel may also be screwed into a drill hole using a screwdriver.
**Fig. 12c****:** A dowel or insert (10) for producing a joint according to the invention. The insert (10) is provided with a screw thread (15). The outer diameter of the thread is Bd and the core diameter is Kd. In this version, the difference between the outer thread and the internal thread is rather small, as a result of which the height of the blades or the thread (15) is rather little and these are thus not elastic. The entire thread is a right-hand thread. It should be understood that this thread may also be a left-hand thread. Moreover, it is also possible to provide a left-hand thread on one half and to provide a right-hand thread on the other half. At the transition from the left-hand to right-hand half of the insert, a transition zone (O) is provided on which blades (16) are provided in the longitudinal direction of the dowel (10). These blades serve to prevent the dowel (10) from starting to rotate during fixing of the first panel (2) into the second panel (3) as significant rotary force is applied to the joint between the dowel (10) and first panel (2) during this rotation. Since the thread is not elastic, an elastic adhesive will have to be used to glue this dowel into the first panel (2), so that this adhesive can absorb any stresses. Compared to Fig. 12a, the thread has a smaller pitch (P). As a result thereof, the stress which occurs between the longitudinal end of the first panel (2) and the second panel (3) during installation will be reduced. In addition, the shape of the screw thread differs. One side of thread is at an angle, the other side is straight. This may have certain advantages during fixing, depending on the type of base material of the second panel (3).
**Fig. 12d****:** Detail of an insert (10) according to the invention. The insert (10) is situated in a drill hole in the longitudinal end of the first panel (2). This insert (10) is anchored in this drill hole by means of an adhesive (6). The first panel (2) has been pulled against the second panel (3) and has reached its end point. As a result thereof, there is a tensile stress in the dowel (10). Due to the fact that an elastic silicone has been used, this dowel will be pulled forward and a distance will be created between the rear side of the dowel (10) and the bottom of the drill hole. This largely absorbs the stress, as a result of which the joint will not break. After all, both the dowel (10) and the panels (2) and (3) are hard panels which can break on account of excessive stress. The screw thread which has been cut into the wall of the drill hole (14), is very fine and often fragile, in particular in chipboard, as a result of which there is a considerable risk that it will break under excessive stress. Therefore, a way has to be found to absorb this stress and an elastic glue is an option in this case. There are several other options, as discussed in Figs. 12 to 15.

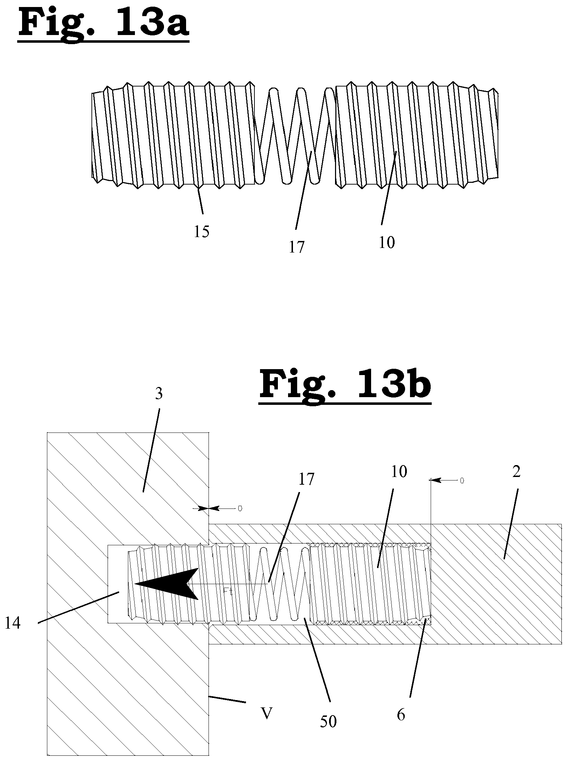

**Fig. 13a****:** A dowel or insert (10) for producing a joint according to the invention. The insert (10) is provided with a screw thread (15). The outer diameter of the thread is Bd and the core diameter is Kd. In this version, the difference between the outer thread and the internal thread is rather small, as a result of which the height of the blades or the thread (15) is rather little and these are thus not elastic. The entire thread is a right-hand thread. It should be understood that this thread may also be a left-hand thread. Moreover, it is also possible to provide a left-hand thread on one half and to provide a right-hand thread on the other half. At the transition from the left-hand to right-hand half of the insert, a transition zone (O) is provided where a spring or elastic portion (17) is provided which makes it possible to pull out the left-hand part of the dowel (10) with respect to the right-hand part of the dowel (10) at the required tensile stress. As a result thereof, the dowel (10) can absorb certain tensile stresses and thus no elastic glue has to be used or is the risk that the fragile cut thread in the drill hole (14) is not damaged. Compared to Fig. 12a, the screw thread has a smaller pitch (P). As a result thereof, the stress which occurs between the longitudinal end of the first panel (2) and the second panel (3) during installation will be reduced.
**Fig. 13b****:** Detail of an insert (10) according to the invention. The insert (10) is situated in a drill hole in the longitudinal end of the panel (2). This insert (10) is anchored in this drill hole by means of an adhesive (6). The first panel (2) has been pulled against the second panel (3) and has reached its end point. As a result thereof, there is a tensile stress in the dowel (10), as a result of which the end which is situated in the drill hole (14) is pulled away from the rest of the dowel which is situated substantially in the first panel (2). Due to the fact that a spring (17) is situated between the left-hand part and the right-hand part of the insert, this will absorb the tensile stresses by expanding. As a result thereof, an adhesive which is not elastic, or less so, may be used. In addition, this dowel (10) could also be directly screwed into drill hole (50) instead of being glued into the latter. This provides a saving on adhesive (6).

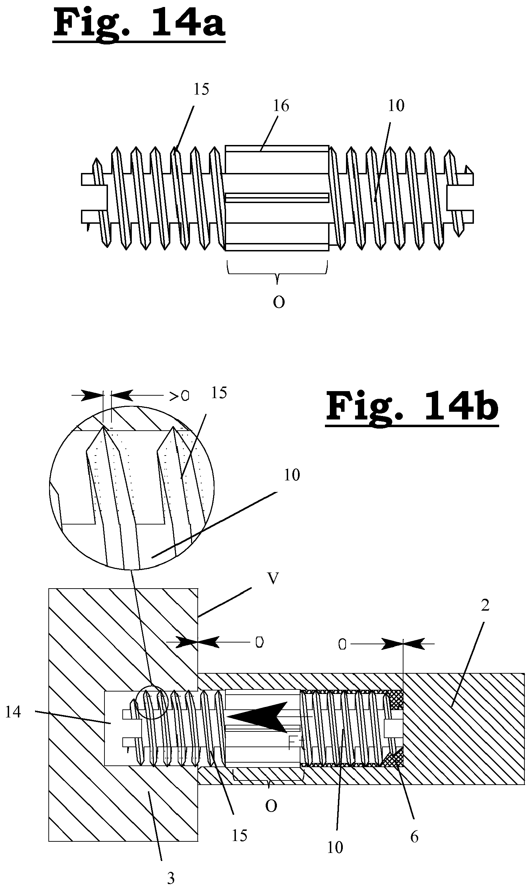

**Fig. 14a****:** Detail of an insert (10) according to the invention. The insert (10) is provided with a screw thread, the thread (15) of which is relatively long or high. Due to the fact that the blades (15) are high, these are slightly elastic and can absorb certain stresses by bending. As a result thereof, it is possible to use less elastic silicone.
   At the transition from the left-hand to right-hand half of the insert, a transition zone (O) is provided on which blades (16) are provided in the longitudinal direction of the dowel (10). These blades serve to prevent the dowel (10) from starting to rotate during fixing of the first panel (2) into the second panel (3) as significant rotary force is applied to the joint between the dowel and first panel (2) during this rotation.
**Fig. 14b****:** Detail of an insert (10) according to the invention. The insert (10) is situated in a drill hole (14) in the longitudinal end of the first panel (2). This insert (10) is anchored in this drill hole by means of an adhesive (6). The panel (2) has been pulled against the panel (3) and has reached its end point. As a result thereof, there is a tensile stress on the dowel (10).
   Due to the fact that the thread (15) of the screw thread is relatively high, it is slightly elastic and thus absorbs a significant part of the tensile stress which is acting on the dowel (10). As a result thereof, the adhesive (6) is prevented from splitting. It is also important to use an adhesive (6) which has a degree of elasticity, so that it can absorb a degree of stress. Due to the blades or beards (16) in the longitudinal direction of the dowel, the torsional forces will also be limited.

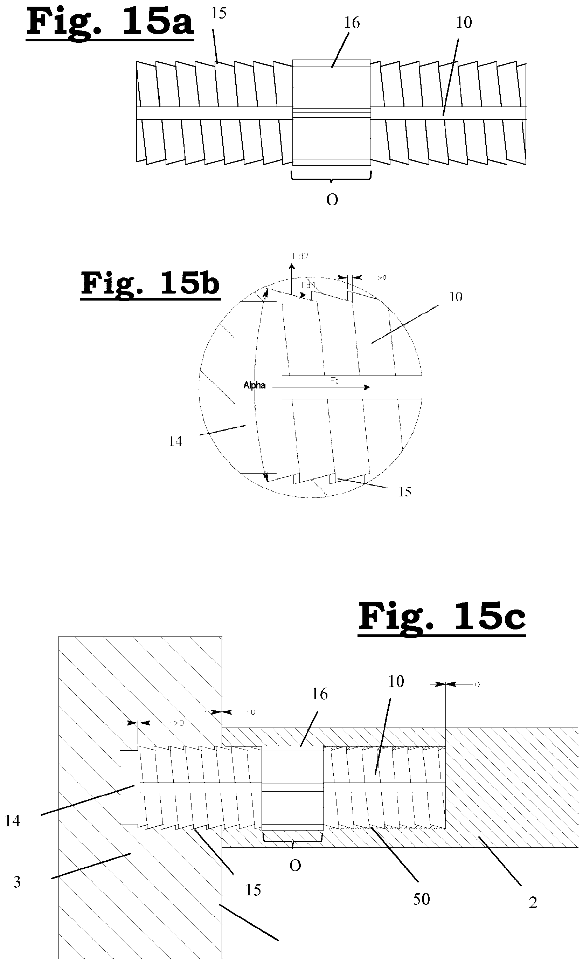

**Figs. 15a and 15b****:** Detail of an insert (10) according to the invention. On the side facing the end of the dowel, the screw thread runs off almost straight down, whereas on the side facing the transition (O) (= centre of the dowel (10)) it runs off at a very small angle (α/2). During fitting, a tension will be applied to the dowel, with a force (Ft) being exerted on the dowel. The tensile force (Ft) will be distributed over the walls of the drill hole (14) with a horizontal force (Fd1) and a vertical force (Fd2). As the angle (α/2) at which the screw thread runs off is very small (α < 15°), the dowel will have the same effect as a key or a wedge. Depending on the tensile force (Ft), it will be possible to pull back the dowel slightly with respect to the screw thread. Due to the fact that the force is directed substantially at right angles to the wall of the drill hole (14), little damage will be done to the beards and the strength of the joint is ensured. Due to the fact that the dowel can move slightly backwards with respect to the screw thread, this will thus be able to absorb the stress.
   A wedge starts to act if α<30°. The screw thread will thus run off at an angle which is < 15° (α/2).
   A groove is provided in the longitudinal direction of the dowel (10) and interrupts the teeth of the screw thread (15). This groove has several functions, thus it ensures an improved distribution of glue because more glue can flow along the dowel (10) via this groove. In addition, this turns the teeth of the screw thread (10) into blades, so that they help to cut the thread (15) when screwing dowel (10) into the first panel (2) and/or into the second panel (3).
**Fig. 15c****:** Detail of an insert (10) according to the invention. The insert (10) is situated in a drill hole in the longitudinal end of the panel (2). This insert (10) is anchored in this drill hole by means of an adhesive (6). The first panel (2) has been pulled against the second panel (3) and has reached its end point. As a result thereof, there is a tensile stress on the dowel (10).
   The tensile force (Ft) will be distributed over the walls of the drill hole (14) with a horizontal force (Fd1) and a vertical force (Fd2). As the angle (α/2) at which the screw thread runs off is very small (α < 15°), the dowel will have the same effect as a key or a wedge. Depending on the tensile force (Ft), it will be possible to pull back the dowel (10) slightly with respect to the screw thread. Due to the fact that the force is directed substantially at right angles to the wall of the drill hole (14), little damage will be done to the beards and the strength of the joint is ensured and remains so.
   Due to the fact that the dowel can move slightly backwards with respect to the screw thread, this will thus be able to absorb the stress.
   A wedge starts to act if α<30°. The screw thread will thus run off at an angle which is < 15° (α/2).
   In the figure, the dowel (10) is glued or stuck in the drill hole (50) in the longitudinal end of the first panel (2). However, this is not obligatory. Thus, this dowel may also be screwed into this drill hole without adhesive (6) being used. Due to the action of the screw thread as a wedge, it will absorb the tensile stress (see Fig. 21).

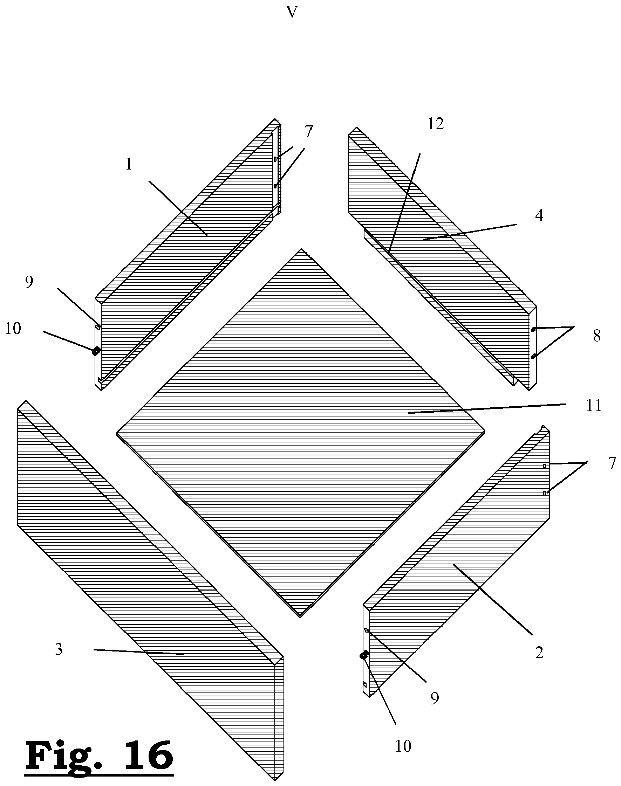

**Fig. 16****:** Split view of a drawer or box wherein at least two panels are connected to each other by means of an insert (10) according to the invention. The box consists of at least 5 components, a left-hand panel (1), a right-hand panel (2), a rear piece (4), a bottom (11) and a front (3). The left-hand piece (1) and the right-hand piece (2) are often symmetrical with respect to each other. At the longitudinal end, on the side of the front (3), the panels (2,3) have at least one dowel or insert (10) according to the invention. Usually, there is also a positioning dowel (9) in addition to this insert (10). The left-hand and right-hand piece (1,2) also have a groove (12) on the bottom side in order to be able to fit the back or base (11). At the longitudinal end which is situated opposite the dowel (10), the left-hand and right-hand piece (1,2) will have one or several holes (7) in order to fit the intermediate piece or rear piece. This may be achieved by means of an insert (20) which is to be inserted into these holes (7) of the side piece (1,2) in order to achieve a connection between the side piece (1,2) and the rear piece. However, the rear piece (4) may also already contain dowels (8) which may or may not have to be unscrewed. The front (3) contains at least the drill holes (13 and 14) on the rear side in order to be able to receive the insert (14) and the positioning dowel (9) and a groove (12) at the bottom to be able to receive the base (11) or rear wall.
   In this figure, the dowels (10) and the positioning dowel (9) have already been fitted in the side pieces (1 and 2). However, these may also be supplied separately, so that the fitter still has to screw these into the front (3) and/or side pieces. In addition, the rear piece (4) has drill holes and dowels (8) or inserts at both longitudinal ends. These inserts (8) may also be supplied separately, so that the customer still has to fit these himself.

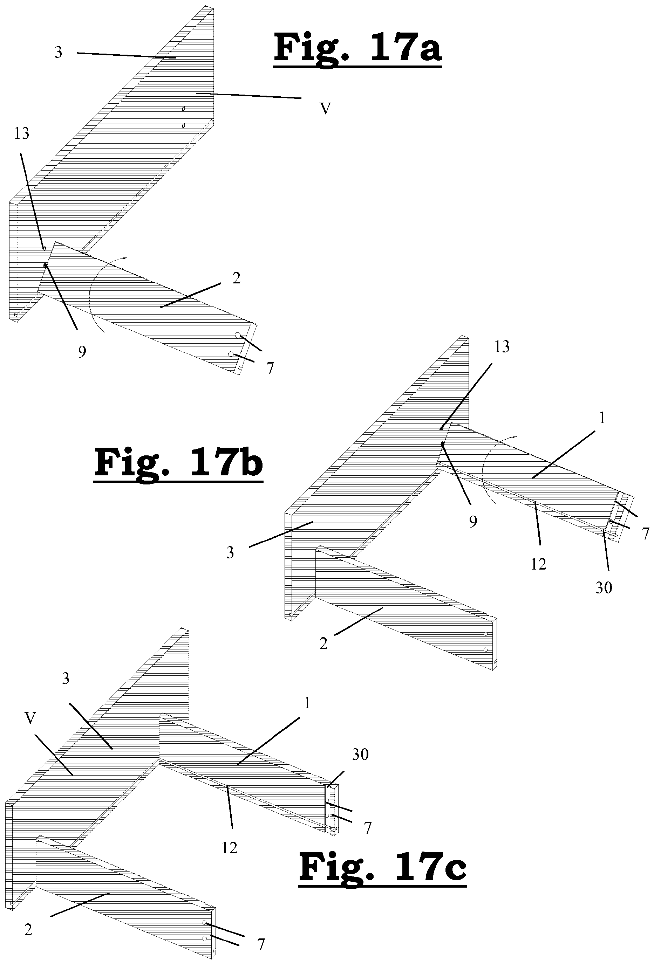

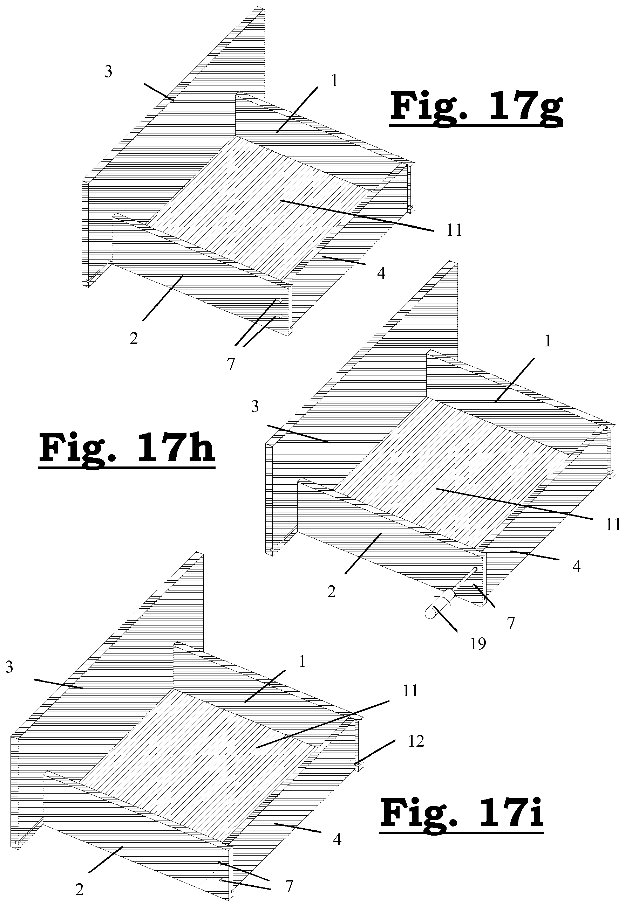

   In Figs. 17a to 17j, the assembly of such a drawer is discussed. However, the sequence in which this assembly takes place may also be different.
**Fig. 17a****:** Front (3) and side piece (2) which have to be connected by means of an insert (10) according to the invention. The insert (10) of the right-hand part (2) is positioned in the drill hole (14) of the front (3) and a start has been made with screwing the right-hand part (2) into the front in a clockwise direction. However, this direction of rotation does not have to be a clockwise direction. It depends on the screw thread on the dowel (10).
**Fig. 17b****:** Front (3) and side piece (1) which have to be connected by means of an insert (10) according to the invention. The insert (10) of the left-hand part (2) is positioned in the drill hole (14) of the front (3) and a start has been made with screwing the right-hand part (2) into the front in a clockwise direction. The left-hand panel (2) has already been fitted in the front (3), this side piece (2) may optionally be positioned by means of a positioning dowel (9). After assembly, it is also possible to see that the groove (12) of the front (3) and the side piece (2) carries on from the one panel (3) to the other panel (2).
**Fig. 17c****:** Front (3), side piece (1) and side piece (2) which are connected by means of an insert (10) according to the invention. The insert (10) of the left-hand part (2) and right-hand part (3) is fitted in the drill hole (14) of the front (3). The left-hand panel (2) and the right-hand panel (3) may optionally be positioned by means of a positioning dowel (9). After assembly, it is also possible to see that the groove (12) of the front (3) and the side pieces (2 and 3) carries on from the one panel (3) to the other panel (2).

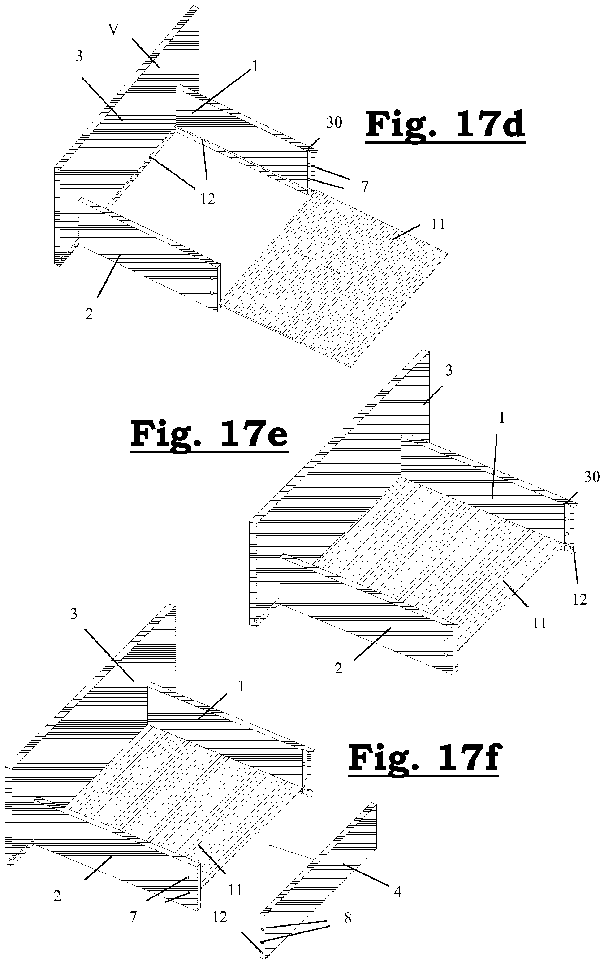

**Fig. 17d****:** Front (3), side piece (1) and side piece (2) which are connected by means of an insert (10) according to the invention. The bottom (11) is slid into the groove (12) of the side pieces (2 and 3).
**Fig. 17e****:** Front (3), side piece (1) and side piece (2) which are connected by means of an insert (10) according to the invention. The bottom (11) has been fully slid into the groove (12) as far as the front (3).
**Fig. 17f****:** Front (3), side piece (1) and side piece (2) which are connected by means of an insert (10) according to the invention. The bottom (11) has been fully slid into the groove (12) as far as the front (3). The rear piece (4) has been inserted between the side pieces (1 and 2). Grooves have been provided on the inside of the side pieces (2 and 1) for positioning. However, this is not obligatory. The side pieces (1 and 2) have drill holes (7) for receiving or passing through attachment parts in order to attach the intermediate piece (4) to the side pieces (1 and 2).
***Fig. 172:*** Front (3), side piece (1) and side piece (2) which are connected by means of an insert (10) according to the invention. The bottom (11) has been fully slid into the groove (12) as far as the front (3). The rear piece (4) has been inserted between the side pieces (1 and 2). Grooves have been provided on the inside of the side pieces (2 and 1) for positioning. However, this is not obligatory. The side pieces (1 and 2) have drill holes (7) for receiving or passing through attachment parts in order to attach the intermediate piece (4) to the side pieces (1 and 2).
**Fig. 17h****:** Front (3), side piece (1) and side piece (2) which are connected by means of an insert (10) according to the invention. The bottom (11) has been fully slid into the groove (12) as far as the front (3). The rear piece (4) is inserted between the side pieces (1 and 2). Grooves have been provided on the inside of the side pieces (2 and 1) for positioning. However, this is not obligatory. The side pieces (1 and 2) have drill holes (7) for receiving or passing through attachment parts in order to attach the intermediate piece (4) to the side pieces (1 and 2). On the longitudinal ends, the central piece (4) has inserts (8) which are provided with a screw thread and which are situated entirely in the side piece. On the longitudinal ends, these inserts (7) have grooves in order to be screwed in or out by means of a screwdriver. In order to anchor the central piece (4) to the side pieces (2 and 1), a screwdriver (19) has to be passed through the drill hole (7) of the side piece and the insert (8) has to be unscrewed, as a result of which it screws into the drill hole of the side piece. As a result thereof, the components of the drawer or box are completely connected to each other. It may be an advantage with regard to assembly that the insert (8) has two screw threads of a different pitch so that the longitudinal end of the rear piece (4) is pulled against the side piece (1, 2) when this insert (8) is unscrewed.
**Fig. 17i****:** Front (3), side piece (1), side piece (2), base (11) and rear piece (4) which are, inter alia, connected by means of an insert (10) according to the invention. The inserts (7) of the rear piece (4) are unscrewed in such a manner that these form a strong joint with the side piece (1 and 2). As a result thereof, the components of the drawer or box are fully connected to each other.

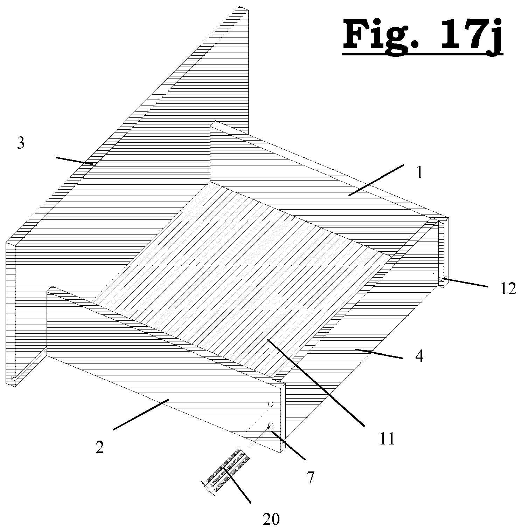

**Fig. 17j****:** Front (3), side piece (1) and side piece (2) which are connected by means of an insert (10) according to the invention. The bottom (11) has been fully slid into the groove (12) as far as the front (3). The rear piece (4) is inserted between the side pieces (1 and 2). Grooves have been provided on the inside of the side pieces (2 and 1) for positioning. However, this is not obligatory. The side pieces (1 and 2) have drill holes (7) for receiving or passing through attachment parts in order to attach the intermediate piece (4) also to the side pieces (1 and 2). On the longitudinal ends, the central piece (4) also has drill holes which make it possible to receive certain inserts (20) in order to make a joint between the side pieces (2) and the central piece (4) possible. These inserts (20) are then pushed through the drill holes (7) as far as the drill holes in the longitudinal ends of the intermediate piece (4). As a result thereof, the components of the drawer or box are fully connected to each other.

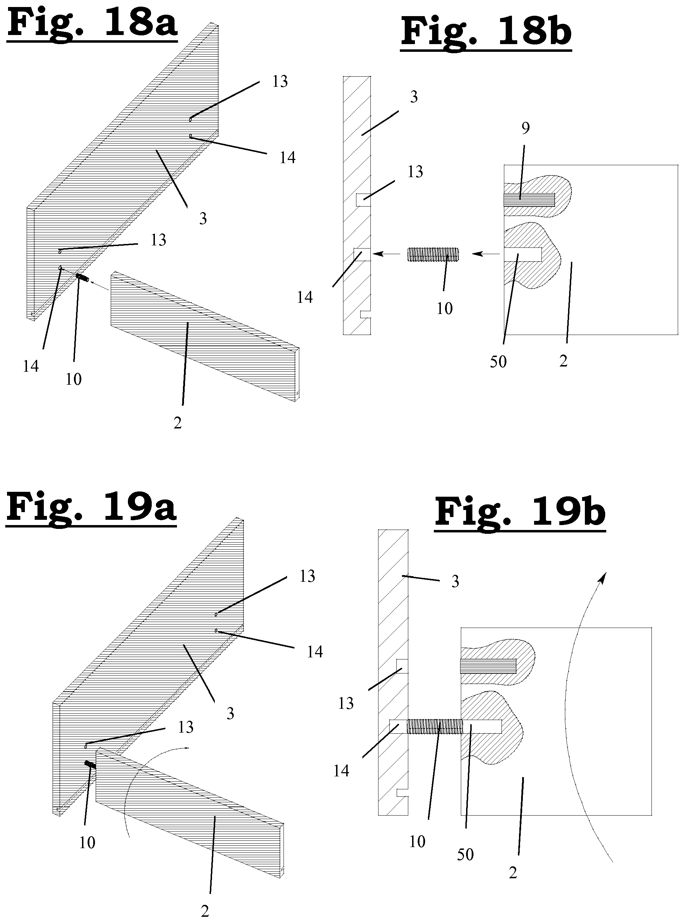

**Fig. 18a****:** Two panels (2,3) comprising a joint according to the invention. In this embodiment, the insert or dowel (10) is not anchored in the first panel (2), but supplied separately. There are thus at least 3 separate components, i.e. the first panel (2), the second panel (3) and the insert or dowel (10) which is provided with a screw thread. The positioning dowel (9) may be anchored in the first panel (2) or may be supplied separately, just like insert (10), in which case this positioning dowel (9) has to be fitted during assembly of the two panels (2,3). If the positioning dowel (9) is supplied separately, this means that there will be 4 components in total. This has the drawback that separate components are again required, but has the advantage that the dowel (10) does not have to be anchored in the first panel (2) or in the second panel (3).
   In addition, this offers the possibility of placing the positioning dowel (9) and/or the insert (10) first into the drill hole of the second panel (3) instead of into the first panel (2). This may have certain advantages with regard to assembly.
   As has already been mentioned earlier, a significant stress is created on the dowel during assembly of the two panels (2 and 3) and this in turn produces a stress on the wall(s) of the drill hole(s) of the first panel (2) and the second panel (3) (see Fig. 15b and Fig. 21).
   If the dowel (10) is fixedly anchored in the first panel (2) by means of an adhesive which is slightly elastic, or not at all, or by means of a heat seal, this force is entirely absorbed by the wall of the drill hole in the second panel (3). This can quickly result in damage.
   If the dowel (10) is screwed or rotated both in the first panel (2) and in the second panel (3) (instead of glued), the forces generated during assembly are distributed over the walls of the drill hole in the first panel (2) and over the walls of the drill hole in the second panel (3), as a result of which the risk of damage will be greatly reduced. According to the drawing, the positioning dowel (9) is in drill hole (51) at the start of assembly. This positioning dowel (9) may in principle also be fitted in drill hole (13) of the second panel (3) at the start of assembly.
**Fig. 18b****:** Two panels (2,3) comprising a joint according to the invention. In this embodiment, the insert or dowel (10) is not anchored in the first panel (2), but supplied separately. There are thus at least 3 separate components, i.e. the first panel (2), the second panel (3) and the insert or dowel (10) which is provided with a screw thread. The positioning dowel (9) may be anchored in the first panel (2) or may be supplied separately, just like insert (10), in which case this positioning dowel (9) has to be fitted during assembly of the two panels (2,3). If the positioning dowel (9) is supplied separately, this means that there will be 4 components in total. This has the drawback that separate components are again required, but has the advantage that the dowel (10) does not have to be anchored in the first panel (2) or in the second panel (3).
   In addition, this offers the possibility of placing the positioning dowel (9) and/or the insert (10) first into the drill hole of the second panel (3) instead of into the first panel (2). This may have certain advantages with regard to assembly.
   As has already been mentioned earlier, a significant stress is created on the dowel during assembly of the two panels (2 and 3) and this in turn produces a stress on the wall(s) of the drill hole(s) of the first panel (2) and the second panel (3) (see Fig. 15b). If the dowel (10) is fixedly anchored in the first panel (2) by means of an adhesive which is slightly elastic, or not at all, or by means of a heat seal, this force is entirely absorbed by the wall of the drill hole in the second panel (3). This can quickly result in damage.
   If the dowel (10) is screwed or rotated in both the first panel (2) and in the second panel (3) (instead of glued), the forces generated during assembly are distributed over the walls of the drill hole in the first panel (2) and over the walls of the drill hole in the second panel (3) as a result of which the risk of damage is greatly reduced. According to the drawing, the positioning dowel (9) is in drill hole (51) at the start of assembly. This positioning dowel (9) may in principle also be fitted in drill hole (13) of the second panel (3) at the start of assembly.
   An alternative way of assembling is then to first fit or screw the dowel (10) into the drill hole (50) in the longitudinal end of the first panel (2). This may be achieved by means of a screwdriver. Subsequently, the first panel (2) has to be screwed into the second panel. This may facilitate positioning and thus assembly.
**Fig. 19a****:** Two panels (2,3) comprising a joint according to the invention. In this embodiment, the insert or dowel (10) is not anchored in the first panel (2), but supplied separately. There are thus at least 3 separate components, i.e. the first panel (2), the second panel (3) and the insert or dowel (10) which is provided with a screw thread. The positioning dowel (9) may be anchored in the first panel (2) or may be supplied separately, just like insert (10), in which case this positioning dowel (9) has to be fitted during assembly of the two panels (2,3). If the positioning dowel (9) is supplied separately, this means that there will be 4 components in total. This has the drawback that separate components are again required, but has the advantage that the dowel (10) does not have to be anchored in the first panel (2) or in the second panel (3).
   In addition, this offers the possibility of placing the positioning dowel (9) and/or the insert (10) first into the drill hole of the second panel (3) instead of into the first panel (2). This may have certain advantages with regard to assembly.
   As has already been mentioned earlier, a significant stress is created on the dowel during assembly of the two panels (2 and 3) and this in turn produces a stress on the wall(s) of the drill hole(s) of the first panel (2) and the second panel (3) (see Fig. 15b). If the dowel (10) is fixedly anchored in the first panel (2) by means of an adhesive which is slightly elastic, or not at all, or by means of a heat seal, this force is entirely absorbed by the wall of the drill hole in the second panel (3). This can quickly result in damage.
   If the dowel (10) is screwed or rotated in both the first panel (2) and in the second panel (3) (instead of glued), the forces generated during assembly are distributed over the walls of the drill hole in the first panel (2) and over the walls of the drill hole in the second panel (3) as a result of which the risk of damage is greatly reduced.
   In this figure, the dowel (10) is positioned in the hole of the second panel (3) and the first panel (2) is in turn positioned on the dowel (10). First, the first panel (2) will now be rotated clockwise, so that the two panels are anchored. During this rotation, the dowel (10) will first cut a thread in the first panel (2) or in the second panel (3), depending on the resistance it encounters. This resistance depends on the diameter of the drill hole and on the type of material into which the dowel (10) is screwed. In addition, the screw thread part of the dowel (10) which is screwed into the first panel (2) may also be different from the screw thread part of the dowel (10) which is screwed into the second panel (3), which is also a problem. The sum of the depth of the drill hole in the first panel (2) and the depth of the drill hole in the second panel (3) is always greater than the total length of the dowel (10). During assembly, one end of the dowel (10) will make contact with the end of the drill hole in the first panel (2) or with the end of the drill hole (14) in the second panel (3). The other end will not make contact with the end of the drill hole in the first panel (2) or second panel (3).
**Fig. 19b****:** Two panels (2,3) comprising a joint according to the invention. In this embodiment, the insert or dowel (10) is not anchored in the first panel (2), but supplied separately. There are thus at least 3 separate components, i.e. the first panel (2), the second panel (3) and the insert or dowel (10) which is provided with a screw thread. The positioning dowel (9) may be anchored in the first panel (2) or may be supplied separately, just like insert (10), in which case this positioning dowel (9) has to be fitted during assembly of the two panels (2,3). If the positioning dowel (9) is supplied separately, this means that there will be 4 components in total. This has the drawback that separate components are again required, but has the advantage that the dowel (10) does not have to be anchored in the first panel (2) or in the second panel (3).
   In addition, this offers the possibility of placing the positioning dowel (9) and/or the insert (10) first into the drill hole of the second panel (3) instead of into the drill hole (50) of the first panel (2). This may have certain advantages with regard to assembly. As has already been mentioned earlier, a significant stress is created on the dowel (10) during assembly of the two panels (2 and 3) and this in turn produces a stress on the wall(s) of the drill hole(s) of the first panel (2) and the second panel (3) (see Fig. 15b). If the dowel (10) is fixedly anchored in the first panel (2) by means of an adhesive which is slightly elastic, or not at all, or by means of a heat seal, this force is entirely absorbed by the wall of the drill hole (14) in the second panel (3). This can quickly result in damage.
   If the dowel (10) is screwed or rotated in both the first panel (2) and in the second panel (3) (instead of glued), the forces generated during assembly are distributed over the walls of the drill hole in the first panel (2) and over the walls of the drill hole in the second panel (3) as a result of which the risk of damage is greatly reduced.
   In this figure, the dowel (10) is positioned in the hole of the second panel (3) and the first panel (2) is in turn positioned on the dowel (10). First, the first panel (2) will now be rotated clockwise, so that the two panels are anchored. During this rotation, the dowel (10) will first cut a thread in the first panel (2) or in the second panel (3), depending on the resistance it encounters. This resistance depends on the diameter of the drill hole with respect to the diameter of the dowel (10) and on the type of material into which the dowel (10) is screwed. It will be clear that the drill holes (50) of the first panel (2) and/or drill hole (14) of the second panel (3) may already have a precut screw thread. This may be a significant advantage with regard to assembly and specifically to positioning of the dowel (10) in the drill holes (14 and/or 50), in particular if the dowel (10) still has to be fitted. In addition, the screw thread part of the dowel (10) which is screwed into the first panel (2) may also be different from the screw thread part (15) of the dowel (10) which is screwed into the second panel (3), which may also mean a difference in resistance. The sum of the depth of the drill hole in the first panel (2) and the depth of the drill hole in the second panel (3) is always greater than the total length of the dowel (10). During assembly, one end of the dowel (10) will make contact with the end of the drill hole in the first panel (2) or with the end of the drill hole (14) in the second panel (3). The other end of the dowel (10) will not make contact with the end of the drill hole in panel (2) or panel (3), but this is regarded as tolerance. If the resistance encountered by the dowel (10) during fitting in the drill holes of both the first panel (2) and the second panel (3) is identical, it is possible, in certain cases, that neither end of dowel (10) makes contact with the end of the drill hole (14) of the second panel (3) and/or the end of the drill hole in the first panel (2).

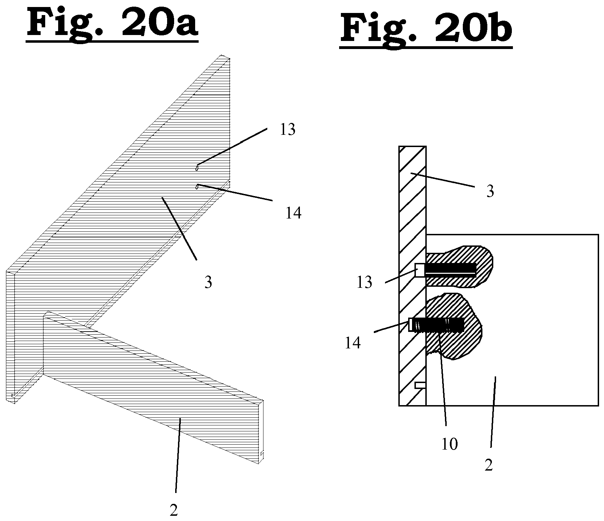

**Fig. 20a****:** Two furniture panels comprising a joint according to the invention. The two panels are connected at right angles to each other by means of at least one dowel (10) according to the invention.
**Fig. 20b****:** Two furniture panels comprising a joint according to the invention. The two panels are connected at right angles to each other by means of a dowel (10) and a positioning dowel (9) or positioning mechanism according to the invention. One end of dowel (10) makes contact with the end of the drill hole (50) in the first panel (2), but does not make contact with the end of drill hole (14) in the second panel (3).
   This means that the resistance encountered by the dowel (10) when it is being screwed into the drill hole (14) of the second panel (3) is greater than the resistance which the dowel (10) encounters when it is being screwed into the first panel (2).
   Because the dowel (10) is under tension, the screw thread of the dowel (10) is slightly pulled back or displaced towards the outlet of the drill holes of the first (2) and the second panel (3) with respect to the already cut screw thread in the wall of the drill holes (50) of the first (2) and the second panel (3).
**Fig. 21****:** Two furniture panels comprising a joint according to the invention. The two panels are connected at right angles to each other by means of a dowel (10) and a positioning dowel (9) or positioning mechanism according to the invention. One end of the dowel (10) makes contact with the end of the drill hole (50) in the first panel (2), but does not make contact with the end of drill hole (14) in the second panel (3). This means that the resistance encountered by the dowel (10) when it is being screwed into the drill hole (14) of the second panel (3) is greater than the resistance which the dowel (10) encounters when it is being screwed into the first panel (2). In extreme cases, it is possible that the dowel (10) does not make contact with any end of the drill holes (14 and 50) when fitted. However, these are usually exceptions.
   Because the dowel (10) is under tension, the screw thread (15) of the dowel (10) is slightly pulled back or displaced towards the outlet of the drill holes of the first (2) and the second panel (3) with respect to the already cut screw thread in the wall of the drill holes (14,50) of the first (2) and the second panel (3). In the first panel (2), the screw thread is displaced by a distance Vd2 with respect to the initially cut screw thread, in the second panel (3), the dowel (10) is displaced by a distance Vd3 with respect to the initially cut screw thread.
   This results in air gaps (L2 and L3) behind the screw thread (15) of the dowel (10). Vd2 is longer than Vd3, this may be due to the fact that the material from which the first panel (2) is made is softer or more compressible than the material from which the second panel (3) is made. It is also possible that no air gaps (L2) are produced in the first panel (2), but are produced in the second panel (3) or vice versa.
   During the formation of these air gaps (L2 and L3), base material of the first panel (2) and/or of the second panel (3) is slightly displaced or compressed. However, this does not necessarily mean that the strength of the joint will decrease. A drill hole has the advantage that, around the drill hole, contact is made with the dowel or with the screw thread (15) of the dowel (10), as a result of which it still has sufficient strength even when there is little contact or few beards.

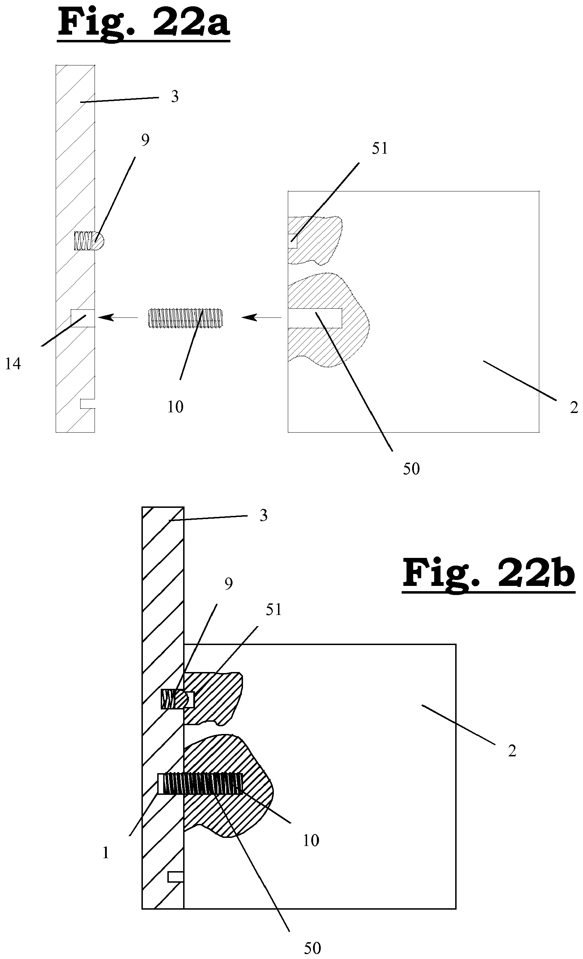

**Fig. 22a****:** Two panels comprising joining elements according to the invention. The panels have not yet been connected. The dowel (10) has to be placed into the drill hole (14) of the second panel (3), in which case the second panel in turn has to be placed on the dowel (10), after which the second panel (3) is rotated about the axis of dowel (10) in order to produce a joint.
   A positioning mechanism (9) is provided in the second drill hole of the second panel (3). This mechanism (9) consists of a dowel with a spherical head with a resilient element behind it. As a result thereof, this dowel (9) can be pushed in at the point in time when the first panel (2) reaches its end point. This offers the advantage that no scratches will occur on the longitudinal end of the first panel (2). This positioning mechanism (9) can also be incorporated in the second drill hole (51) of the first panel (2). The resilient mechanism (9) may then have the advantage that it will not cause any damage to the surface (V) of the second panel (3) during assembly.
   In this figure, the positioning mechanism (9) has a spherical head, but this may also have many other forms, depending on the requirements with regard to assembly and/or disassembly.
**Fig. 22b****:** Two panels comprising joining elements according to the invention. The panels are in a connected position. A positioning mechanism (9) is provided in the second drill hole (13) of the second panel (3). This mechanism consists of a dowel with a spherical head with a resilient element/mechanism behind it. As a result thereof, this dowel (9) can be pushed in at the point in time when the first panel (2) reaches its end point. This offers the advantage that no scratches will occur on the longitudinal end of the first panel (2). This positioning mechanism (9) can also be incorporated in the second drill hole (51) of the first panel. The resilient mechanism may then have the advantage that it will not cause any damage to the surface (V) of the second panel (3) during assembly. In the figure, only one positioning mechanism (9) can be seen, but it is possible to use several positioning mechanisms (9) per joint.
   In this figure, the positioning mechanism (9) has a spherical head, but this may also have many other forms, depending on the requirements with regard to assembly and/or disassembly.
   Such positioning mechanisms (9) may also have the form of two magnets which connect every time the two magnets pass each other.
   Another assembly technique could also be created by manually pushing a dowel (9) forward at the point in time when the second panel has reached its end position. Manually pushing forward the dowel may be effected in various ways, usually by an additional drill hole in the first panel (2).

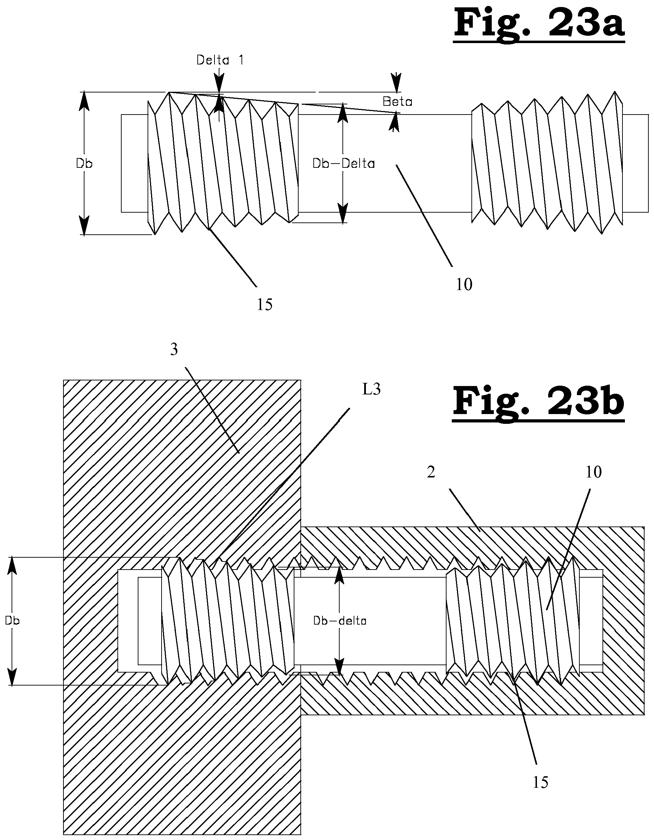

**Fig. 23a****:** Dowel or insert (10) according to the invention. With this dowel, the outer diameter (Bd) of the dowel (10) is not the same for every thread or tongue. The thread (15) tapers (its diameter declines) towards the centre of the dowel. Every tongue or thread is δ1 smaller than the previous tongue or thread. This has the advantage that, when a tensile stress is applied to the dowel (10) and the dowel pushes base material away, the previous tongue will still have material because its diameter is greater. In other words, the previous tongue will still have δ1 thickness of base material to engage, which means that this joint will never be stress-free.
**Fig. 23b****:** Dowel or insert (10) according to the invention. With this dowel, the outer diameter (Bd) of the dowel (10) is not the same for every thread or tongue. The thread (15) tapers (its diameter declines) towards the centre of the dowel. Every tongue or thread is δ1 smaller than the previous tongue or thread (starting from one end of the dowel (10) towards the centre). This has the advantage that, when a tensile stress is applied to the dowel (10) and the dowel pushes base material away, the previous tongue will still have material because its diameter is greater. In other words, the previous tongue will still have δ1 thickness of base material to engage, which means that this joint will never be stress-free.
   An air gap L3 is present behind every tongue. The difference between the total diameter outer diameter Bd and the diameter of the smallest tongue is δ. The difference between the teeth is δ1.

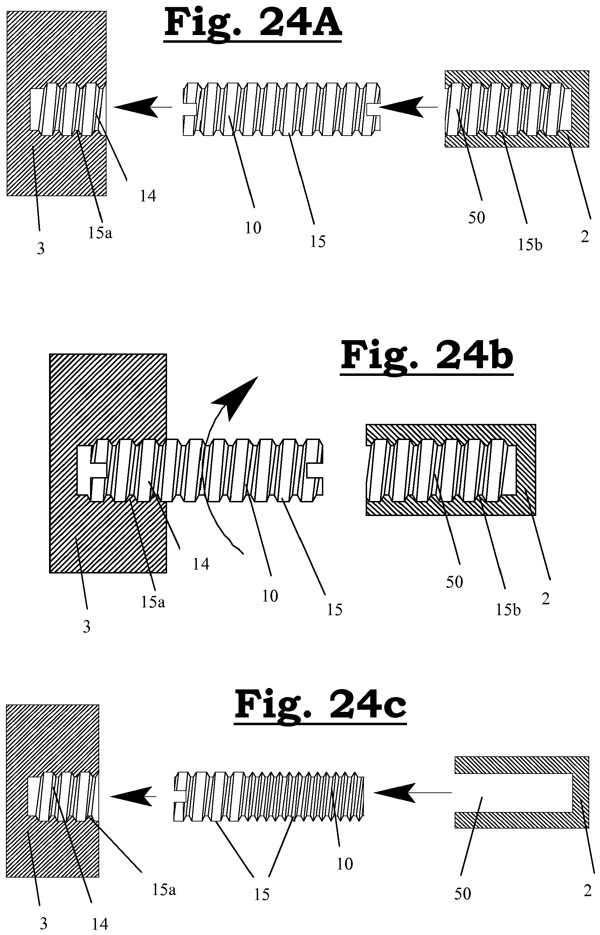

**Fig. 24a****:** Two panels (3,2) comprising a joint or insert (10) according to the invention. The first panel (2) is provided with a drill hole (50) which is provided with a precut internal screw thread (15b). The second panel (3) is also provided with a drill hole (14) which is likewise provided with a precut internal screw thread (15a). The insert (10) which serves to connect the two panels contains a screw thread (15) which can cooperate with, on the one hand, the screw thread (15a) of the second panel (3) and, on the other hand, with the internal screw thread (15b) of the first panel (2). It will be clear that the precut internal screw thread (15b) of the second panel (3) and the precut internal screw thread (15a) of the first panel (2) do not have to be the same. This may have the advantage that, if all components (first panel (2), second panel (3) and the insert (10)) are supplied separately, the fitter can already easily screw the dowel (10) by hand (i.e. without the use of a screwdriver) into the first panel (2) or into the second panel (3) before connecting the two panels with the insert (10).
   In addition, the teeth of the internal screw thread (15a and 15b) of the drill holes (50,14) can be made higher and/or wider, so that these are stronger than the teeth which result if the screw thread is to be cut into the drill holes (14,50) by means of the dowel (10). The same applies to the screw thread (15) of the dowel (10).
   In addition, this precut screw thread (15a,15b) can offer the same advantages and tension regulation as the non-precut screw thread which has already been mentioned in this document.
**Fig. 24b****:** Two panels (3,2) comprising a joint or insert (10) according to the invention. The first panel (2) is provided with a drill hole (50) which is provided with an internal screw thread (15b). The second panel (3) is also provided with a drill hole (14) which is likewise provided with an internal screw thread (15a). The insert (10) which serves to connect the two panels contains a screw thread (15) which can cooperate, on the one hand, with the screw thread (15a) of the second panel (3) and, on the other hand, with the internal screw thread (15b) of the first panel (2). It will be clear that the precut internal screw thread (15b) of the second panel (3) and the precut internal screw thread (15a) of the first panel (2) do not have to be the same. This may have the advantage that, if all components (first panel (2), second panel (3) and the insert (10)) are supplied separately, the fitter can already easily screw the dowel (10) by hand (i.e. without the use of a screwdriver) into the first panel (2) or into the second panel (3) before connecting the two panels with the insert (10).
   In addition, the teeth of the internal screw thread (15a and 15b) of the drill holes (50,14) can be made higher and/or wider, so that these are stronger than the teeth which result if the screw thread is to be cut into the drill holes (14,50) by means of the dowel (10). The same applies to the screw thread (15) of the dowel (10).
   In the drawing (24b), the dowel (10) has already been screwed into the second panel (3) almost completely. Subsequently, drill hole (50) of the first panel (2) has to be positioned on the dowel (10) and the latter has to be screwed on in order to produce the joint.
**Fig. 24c****:** Two panels (3,2) comprising a joint or insert (10) according to the invention. The first panel (2) is provided with a drill hole (50) which is not provided with a screw thread. The second panel (3) is also provided with a drill hole (14) which is provided with an internal screw thread (15a). The insert (10) which serves to connect the two panels contains a screw thread (15) which can cooperate, on the one hand, with the screw thread (15a) of the second panel (3) and, on the other hand, with the drill hole (50) of the first panel (2). This may have the advantage that, if all components (first panel (2), second panel (3) and the insert (10)) are supplied separately, the fitter can already easily screw the dowel (10) by hand (i.e. without the use of a screwdriver) into the second panel (3) before connecting the two panels with the insert (10). It will be clear that the reverse may also be the case, namely that drill hole (50) of the first panel (2) is provided with a precut internal screw thread, but the drill hole (14) of the second panel (3) is not.
   The teeth of the internal screw thread (15a) of the drill hole (14) can be made higher and/or wider, so that these are stronger than the teeth which result if the screw thread is to be cut into the drill hole (14) by means of the insert (10). The same applies to the screw thread (15) of the dowel (10).

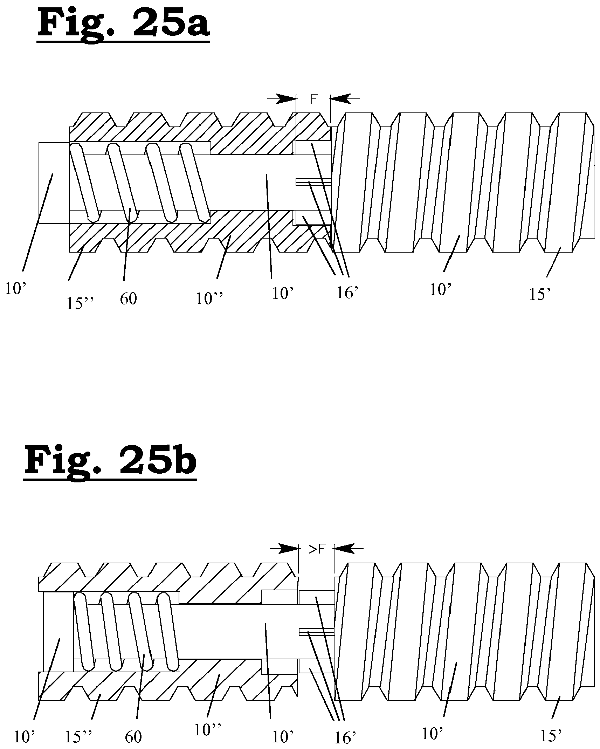

**Fig. 25a****:** Variant of an insert for producing a joint between two panels according to the invention. The insert (10) substantially consists of two parts, i.e. a first part (10') which is provided with a screw thread (15') on the right-hand side and has a left-hand side which has a much smaller diameter than the right-hand side and which is not provided with a screw thread. At the very end of the left-hand side, a stop is provided with a relatively larger diameter than the rest of the left-hand side of the first part (10'). This stop may be formed as a single part with the first part (10'), but may also be screwed or attached onto this first part (10'), since this makes it easier to fit the spring (60). The second part is situated on the left-hand side of the first part (10') and can be displaced to the left with respect to the first part (10') if a certain force is exerted. This displacement is counteracted by an elastic or spring-like system (60) which pushes the second part (10") to the right. Beards or blades (16') are provided on the left-hand side of the first part (10') in the longitudinal direction of the first part (10') to prevent the second part (10") from being able to rotate with respect to the first part (10'). These blades (16') have a length (F). If the second part (10") is displaced a distance (F) to the left, the second part (10") is uncoupled from the blades (16') of the first part (10'), as a result of which the second part (10") is able to freely rotate with respect to the first part (10') and vice versa. This dowel may be made of metal, aluminium, an alloy, plastic, a WPC, wood or a combination of the aforementioned materials.
**Fig. 25b****:** Variant of an insert for producing a joint between two panels according to the invention. The insert (10) substantially consists of two parts, i.e. a first part (10') which is provided with a screw thread (15') on the right-hand side and has a left-hand side which has a much smaller diameter than the right-hand side and which is not provided with a screw thread. At the very end of the left-hand side, a stop is provided with a relatively larger diameter than the rest of the left-hand side of the first part (10'). The second part is situated on the left-hand side of the first part (10') and can be displaced to the left with respect to the first part (10') if a certain force is exerted. This displacement is counteracted by an elastic or spring-like system (60) which pushes the second part (10") to the right. Beards or blades (16') are provided on the left-hand side of the first part (10') in the longitudinal direction of the first part (10') to prevent the second part (10") from being able to rotate with respect to the first part (10'). These blades (16') have a length (F). If the second part (10") is displaced a distance (F) to the left, the second part (10") is uncoupled from the blades (16') of the first part (10') as a result of which the second part (10") is able to freely rotate with respect to the first part (10') and vice versa. In Fig. 25b, the left-hand side (10") is displaced to the left by a distance greater than F, as a result of which the second part (10") now is able to rotate freely with respect to the first part (10') and vice versa.

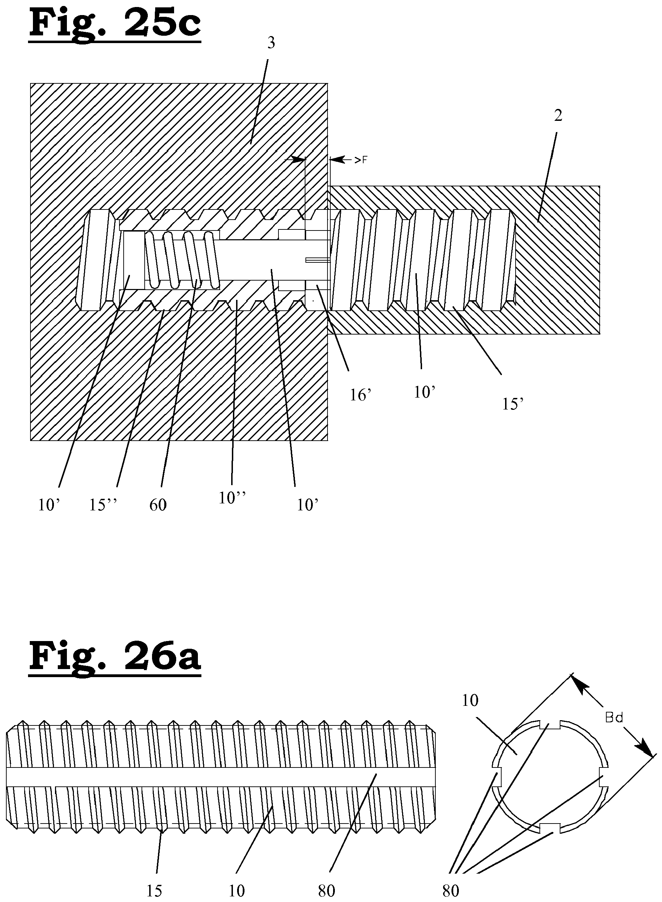

**Fig. 25c****:** Joint between two panels (2 and 3) comprising an insert (10) according to the invention, the insert (10) is the same as the insert described in Figs. 25a and 25b.
   The two panels are connected to each other and the longitudinal end of the first panel (2) makes contact with the surface (V) of the second panel (3). As a result thereof, there is a tensile stress on the dowel (10) as a result of which the second part (10") of the dowel is displaced to the left. Once the distance by which the second part (10") of the insert (10) is displaced to the left becomes greater than F, the second part (10") is uncoupled from the blades (16') of the first part (10'), as a result of which the second part (10") is able to rotate freely with respect to the first part (10') of the dowel (10). The result thereof is that, in that position, the first panel (2) is able to rotate freely with respect to the second panel without the dowel (10) still exerting an additional force on the walls of the drill holes (14,50) of the second panel (3) and/or of the first panel (2), and therefore not on the cut or precut screw thread either. As a result thereof, the first panel (2) may be rotated to its end point with respect to the second panel (3) without any risk of damage to the cut and/or precut internal screw thread of drill holes (14,50) of the first and/or second panel (2,3). It will be clear that this dowel (10), as described in figures (25a and 25b) may also be used with a precut internal screw thread, can be anchored with standard drill holes (no screw thread) or by glueing.
**Fig. 26a****:** Variant of a dowel (10) for a joint according to the invention. The dowel (10) is provided with four grooves (80) in the longitudinal direction of the dowel (10). As a result thereof, the screw thread (15) is at least partly interrupted. This has the advantage that glue chambers are created in the longitudinal direction of the dowel (10), as a result of which, if the dowel (10) moves on account of the tensile force (Ft) which manifests during assembly, these glue chambers ensure an elastic anchoring. After all, if the dowel (10) moves, the adhesive (6) situated in the screw thread (15) will be damaged by this screw thread (15). Due to the fact that there is a glue chamber in the longitudinal direction of the dowel (10) and the screw thread is at least partly interrupted by these grooves/glue chambers (80), the adhesive (6) which is situated in these glue chambers will not be damaged by the screw thread (15). This dowel (10) has four grooves (80), but it may also have fewer or more, depending on the fastening which is required. In addition, the grooves (80) do not necessarily have to run along the entire length of the dowel (10). Thus, the grooves (80) may be limited to the part which is situated in the drill hole (50), whereas the part which is situated outside the drill hole (50) does not contain grooves (80) in the longitudinal direction. However, these grooves (80) may also have an advantage in the part situated outside the drill hole (80), namely when cutting the screw thread into the drill hole (14) of the second panel (3) during fitting of the first panel (2) into the second panel (3).

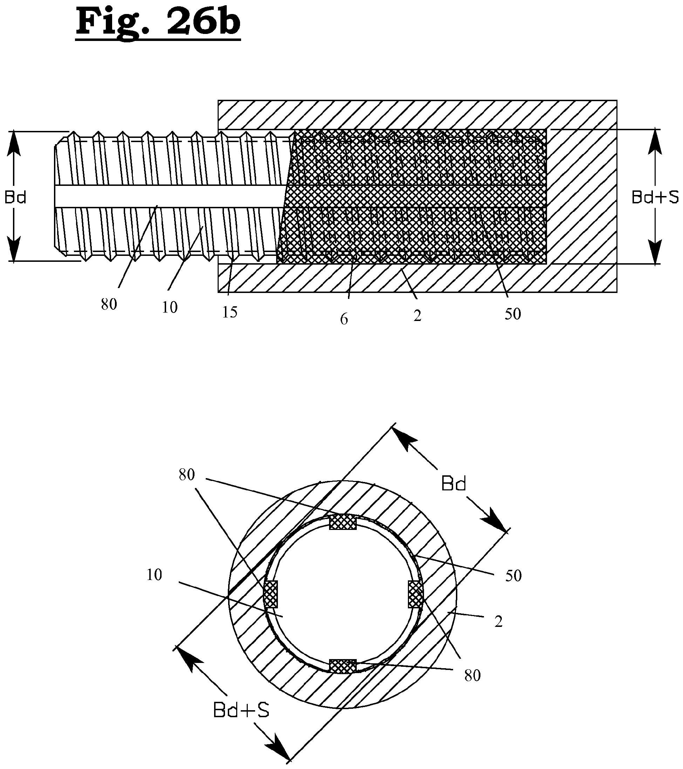

**Fig. 26b****:** Variant of a dowel (10) for a joint according to the invention. The dowel (10) is provided with four grooves (80) in the longitudinal direction of the dowel (10). As a result thereof, the screw thread (15) is at least partly interrupted. This has the advantage that glue chambers (80) are created in the longitudinal direction of the dowel (10), as a result of which, if the dowel (10) moves on account of the tensile force (Ft) which manifests during assembly, these glue chambers ensure an elastic anchoring. After all, if the dowel (10) moves, the adhesive (6) situated in the screw thread (15) will be damaged by this screw thread (15). Due to the fact that there is a glue chamber in the longitudinal direction of the dowel (10) and the screw thread is at least partly interrupted by these grooves/glue chambers (80), the adhesive (6) which is situated in these glue chambers will not be damaged by the screw thread (15). This dowel (10) has four grooves (80), but it may also have fewer or more, depending on the fastening which is required. In addition, the grooves (80) do not necessarily have to run along the entire length of the dowel (10). Thus, the grooves (80) may be limited to the part which is situated in the drill hole (50), whereas the part which is situated outside the drill hole (50) does not contain grooves (80) in the longitudinal direction. However, these grooves (80) may also have an advantage in the part situated outside the drill hole (80), namely when cutting the screw thread into the drill hole (14) of the second panel (3) during fitting of the first panel (2) into the second panel (3). In the fitted position, the dowel (10) is situated in the first panel (2), in which case an adhesive (6) is present around the dowel (10) and in the glue chambers (80). It can clearly be seen that there is a tolerance (S) present between the outer diameter of the thread (Bd) and the diameter of the drill hole (50) of the first panel (2). This tolerance (S) makes it possible for the dowel (10) to move with respect to the drill hole (10). This movement is obviously limited but sufficient to absorb the tensile forces produced during assembly, so that the screw thread cut into the drill hole (14) of the second panel (3) is not damaged.

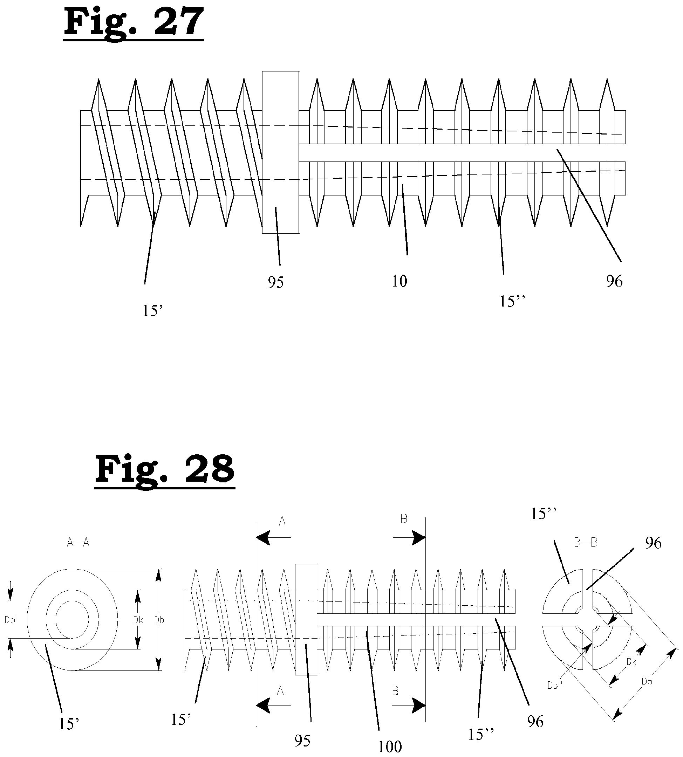

**Fig. 27****:** A screw body (screw element) (10) according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted four times in the longitudinal direction of the screw body (10). As a result thereof, four legs which are provided with beards (15") which are positioned substantially at right angles to the screw body (10) are created to the right of the collar (95) in the longitudinal direction of the screw body (10). It will be clear that fewer or more interruptions may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards are anchored in the wall of the drill hole (14).
   It will be clear that it is not obligatory for the collar (95) to be pushed against the base material of the first panel (2) in order to achieve a satisfactory positioning or fitting, thus, it is also possible to create another stop or the screw body (10) may also be held loosely in the drill hole during fitting.
**Fig. 28****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95) Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards are anchored in the wall of the drill hole (14).
   It will be clear that it is not obligatory for the collar (95) to be pushed against the base material of the first panel (2) in order to achieve a satisfactory positioning or fitting, thus, it is also possible to create another stop or the screw body (10) may also be held loosely in the drill hole during fitting.

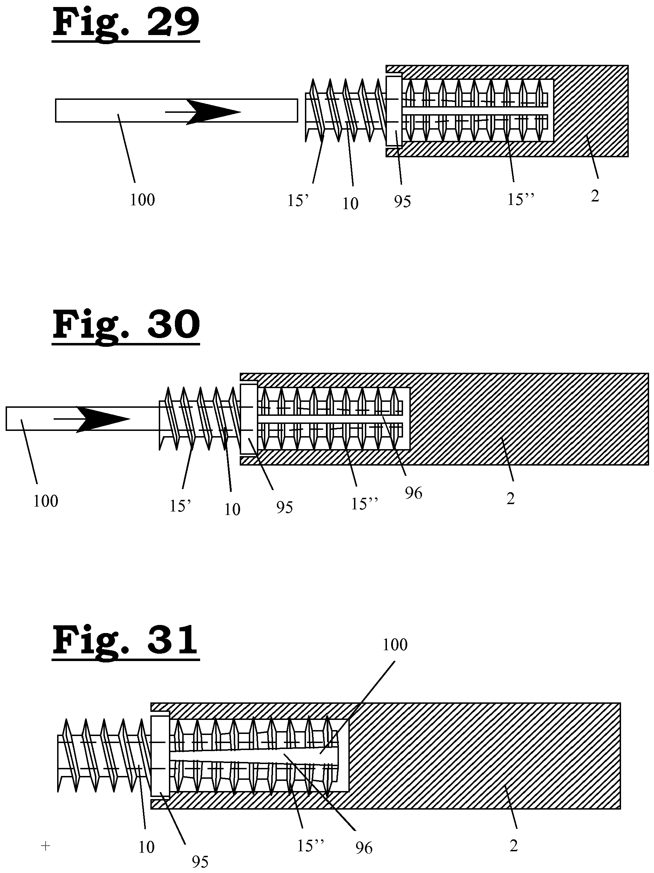

**Fig. 29****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95). Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards are anchored in the wall of the drill hole (14).
   As a result thereof, the screw body (10) is fixedly anchored in the drill hole (50). Thus, the screw body (10) is fixedly anchored in such a manner that it cannot be pulled out of the drill hole (50), but, in addition, rotation of the screw body (10) will be prevented or avoided due to the friction force created between the beards (15") and the wall of the drill hole (50) after anchoring. Thus, the screw body (10) will not rotate in the drill hole (50) if the left-hand part of the screw body (10) is screwed into the second panel. Only when the collar (95) of the screw body (10) makes contact with surface (V) of the second panel is the second panel (3) prevented from being rotated in, in which case the part to the right of the collar (95) will take over to perform the rotation. As this right-hand part has no screw thread, but beards (15"), which are substantially at right angles to the longitudinal direction of the screw body (10), no additional tension, or hardly any, is created between the longitudinal end of the first panel (2) and the surface (V) of the second panel (3) during this rotation. As a result thereof, the cut screw thread will not be damaged and the strength of the joint will not be reduced either and/or the joint will not be broken.
**Fig. 30****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95). Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards are anchored in the wall of the drill hole (14).
   As a result thereof, the screw body (10) is fixedly anchored in the drill hole (50). Thus, the screw body (10) is fixedly anchored in such a manner that it cannot be pulled out of the drill hole (50), but, in addition, rotation of the screw body (10) will be prevented or avoided due to the friction force created between the beards (15") and the wall of the drill hole (50) after anchoring. Thus, the screw body (10) will not rotate in the drill hole (50) if the left-hand part of the screw body (10) is screwed into the second panel. Only when the collar (95) of the screw body (10) makes contact with surface (V) of the second panel is the second panel (3) prevented from being rotated in, in which case the part to the right of the collar (95) will take over to perform the rotation. As this right-hand part has no screw thread, but beards (15"), which are substantially at right angles to the longitudinal direction of the screw body (10), no additional tension, or hardly any, is created between the longitudinal end of the first panel (2) and the surface (V) of the second panel (3) during this rotation. As a result thereof, the cut screw thread will not be damaged and the strength of the joint will not be reduced either and/or the joint will not be broken.
**Fig. 31****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15 ") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95). Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards are anchored in the wall of the drill hole (14).
   As a result thereof, the screw body (10) is fixedly anchored in the drill hole (50). Thus, the screw body (10) is fixedly anchored in such a manner that it cannot be pulled out of the drill hole (50), but, in addition, rotation of the screw body (10) will be prevented or avoided due to the friction force created between the beards (15") and the wall of the drill hole (50) after anchoring. Thus, the screw body (10) will not rotate in the drill hole (50) if the left-hand part of the screw body (10) is screwed into the second panel. Only when the collar (95) of the screw body (10) makes contact with surface (V) of the second panel is the second panel (3) prevented from being rotated in, in which case the part to the right of the collar (95) will take over to perform the rotation. As this right-hand part has no screw thread, but beards (15"), which are substantially at right angles to the longitudinal direction of the screw body (10), no additional tension, or hardly any, is created between the longitudinal end of the first panel (2) and the surface (V) of the second panel (3) during this rotation. As a result thereof, the cut screw thread will not be damaged and the strength of the joint will not be reduced either and/or the joint will not be broken.

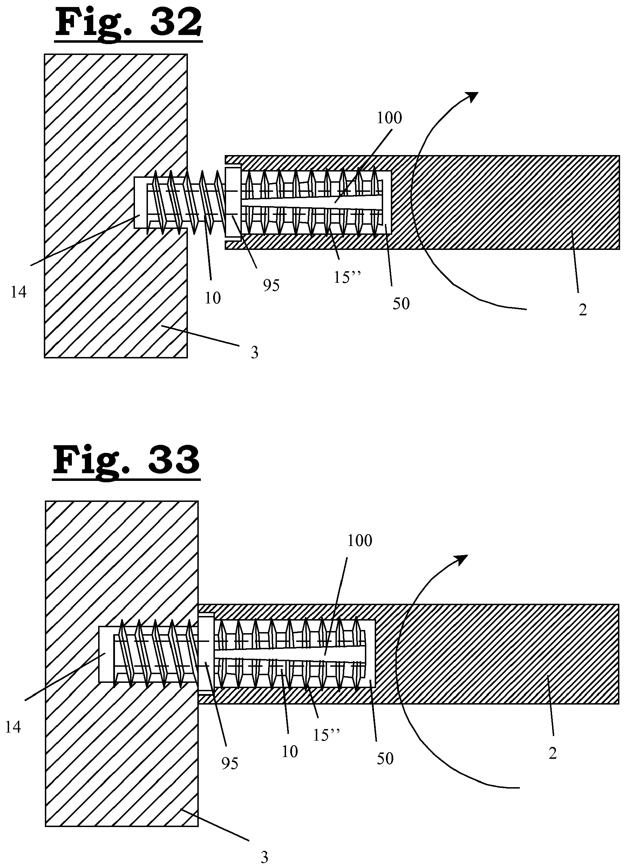

**Fig. 32****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95). Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions (95) and/or legs may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards (15") are anchored in the wall of the drill hole (14).
   As a result thereof, the screw body (10) is fixedly anchored in the drill hole (50). Thus, the screw body (10) is fixedly anchored in such a manner that it cannot be pulled out of the drill hole (50), but, in addition, rotation of the screw body (10) will be prevented or avoided due to the friction force created between the beards (15") and the wall of the drill hole (50) after anchoring. Thus, the screw body (10) will not rotate in the drill hole (50) if the left-hand part of the screw body (10) is screwed into the second panel. Only when the collar (95) of the screw body (10) makes contact with surface (V) of the second panel is the second panel (3) prevented from being rotated in, in which case the part to the right of the collar (95) will take over to perform the rotation. As this right-hand part has no screw thread, but beards (15"), which are substantially at right angles to the longitudinal direction of the screw body (10), no additional tension, or hardly any, is created between the longitudinal end of the first panel (2) and the surface (V) of the second panel (3) during this rotation. As a result thereof, the cut screw thread in drill hole (14) will not be damaged and the strength of the joint will not be reduced either and/or the joint will not be broken.
**Fig. 33****:** A screw body according to the invention. The screw body (10) has a collar or stop (95) which divides the screw body into a left-hand and a right-hand part. The left-hand part has a screw thread (15') which, after fitting, is situated in the second panel (3). The right-hand part has beards (15") which are not a screw thread, but these beards (15") are substantially at right angles to the longitudinal direction of the screw body (10). It will be clear that the beards (15") of the right-hand part may, in addition, be placed in the form of a screw thread, if desired at a much smaller pitch (p) than the part to the left of the collar or stop (95). A continuous drill hole is provided in the longitudinal direction of the screw body (10). The diameter of this continuous drill hole decreases from the collar (95) towards the end of the right-hand part of the screw body (10). The part which is situated to the right of the collar (95) is interrupted (96) four times in the longitudinal direction of the screw body (10). It will be clear that these interruptions (96) do not have to run as far as the collar (95). Thus, it may be that these interruptions (96) do not run as far as the collar (95) in order to ensure a better distribution of the stresses. As a result thereof, four legs which are provided with beards (15") which are positioned substantially at right angles to the screw body (10) are created to the right of the collar (95) in the longitudinal direction of the screw body (10). It will be clear that fewer or more interruptions (95) and/or legs may be possible. The fitting of the screw body (10) into the first panel (2) is not effected by means of screwing, but by placing the screw body (10) in the drill hole (50) of the first panel (2) so that the collar (95) rests against the base material of the first panel (2), after which a pin (100) which is provided especially for the purpose is positioned in the continuous drill hole of the screw body (10). As a result thereof, the legs which are situated to the right of the collar (95) are pushed outwards, as a result of which the beards (15") are anchored in the wall of the drill hole (14).
   As a result thereof, the screw body (10) is fixedly anchored in the drill hole (50). Thus, the screw body (10) is fixedly anchored in such a manner that it cannot be pulled out of the drill hole (50), but, in addition, rotation of the screw body (10) will be prevented or avoided due to the friction force created between the beards (15") and the wall of the drill hole (50) after anchoring. Thus, the screw body (10) will not rotate in the drill hole (50) if the left-hand part of the screw body (10) is screwed into the second panel. Only when the collar (95) of the screw body (10) makes contact with surface (V) of the second panel is the second panel (3) prevented from being rotated in, in which case the part to the right of the collar (95) will take over to perform the rotation. As this right-hand part has no screw thread, but beards (15"), which are substantially at right angles to the longitudinal direction of the screw body (10), no additional tension, or hardly any, is created between the longitudinal end of the first panel (2) and the surface (V) of the second panel (3) during this rotation. As a result thereof, the cut screw thread in drill hole (14) will not be damaged and the strength of the joint will not be reduced either and/or the joint will not be broken. It will be clear that the end point of the rotation of the left-hand part of the screw body (10) in the second panel (3) does not always have to be a collar, as is the case in Fig. 33. Thus, it is also possible for e.g. the end point of the rotation in drill hole (14) of the second panel (3) to be formed by the longitudinal end of the left-hand part of the screw body (10).

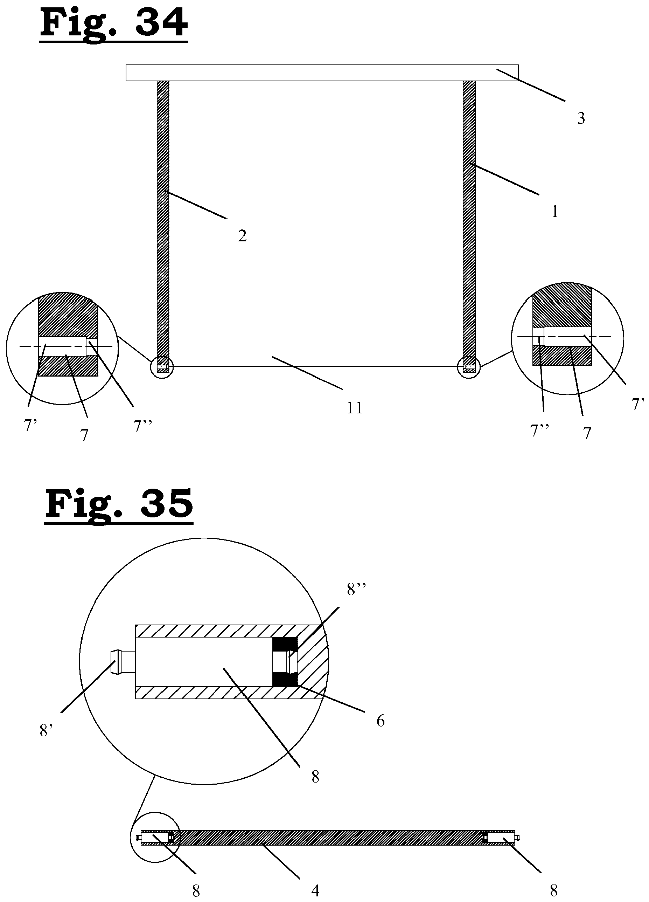

**Fig. 34****:** A drawer box consisting of at least two side panels (1,2), a front (3), a bottom (11) and an intermediate piece or rear piece (4), with the rear piece not being shown in this figure. The connection of the two side panels (1,2) with the front (3) may be brought about by means of a joint according to the invention, but may, according to this drawing, be brought about in a more traditional manner, such as by an eccentric joint and/or by wooden dowels and glue. In the figure, the longitudinal end opposite the longitudinal end which is connected to the front (3) is provided with at least one continuous drill hole (7) through the thickness of the side piece (1,2). The drill hole (7) is a stepped drill hole consisting of at least two different diameters, with the drill hole (7') ending on the outer side of the drawer box having a larger diameter than the drill hole (7") ending on the inner side of the drawer box. Due to the fact that the drill hole (7) is stepped, a beard is produced at the transition from the one drill hole (7') to the other drill hole (7") which can and will be used to anchor the intermediate piece (4) and the side piece, as will also be explained in the following figures.
**Fig. 35****:** Rear piece (4) according to the invention. At least one insert or dowel (8) is provided on both sides of the rear piece (4). It will be clear that several dowels (8) are possible. In principle, one dowel is not sufficient, as this does not provide anchoring against rotation of the rear piece (4) with respect to the side pieces (2,3). Anchoring parts (8' and 8") with beards are provided on both sides of this dowel (8).

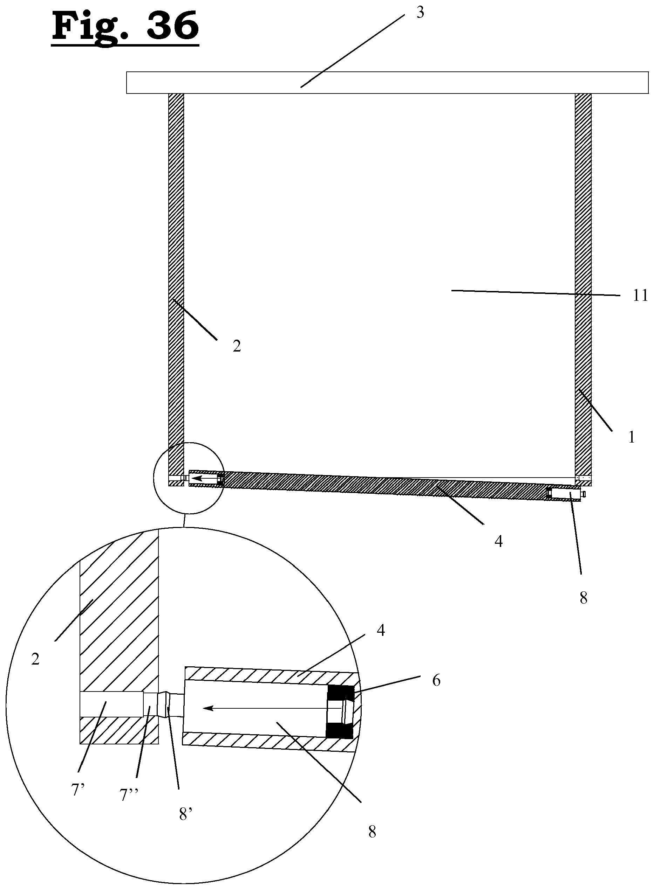

**Fig. 36****:** A drawer box consisting of at least two side panels (1,2), a front (3), a bottom (11) and an intermediate piece or rear piece (4), wherein the rear piece (4) is still to be connected or fitted. The connection of the two side panels (1,2) with the front (3) may be brought about by means of a joint according to the invention, but may, according to this drawing, be brought about in a more traditional manner, such as by an eccentric joint and/or by wooden dowels and glue. In the figure, the longitudinal end opposite the longitudinal end which is connected to the front (3) is provided with at least one continuous drill hole (7) through the thickness of the side piece (1,2). The drill hole (7) is a stepped drill hole consisting of at least two different diameters, with the drill hole (7') ending on the outer side of the drawer box having a larger diameter than the drill hole (7") ending on the inner side of the drawer box. Due to the fact that the drill hole (7) is stepped, a beard is produced at the transition from the one drill hole (7') to the other drill hole (7") which can and will be used to anchor the intermediate piece (4) to the side piece. The drawing shows how the intermediate piece (4) is positioned in such a way that the coupling means (8') of the dowel (8) in the opening (7") of the drill hole (7). By exerting a force, the coupling means (8') will snap into the opening (7") of the drill hole (7) and be anchored.

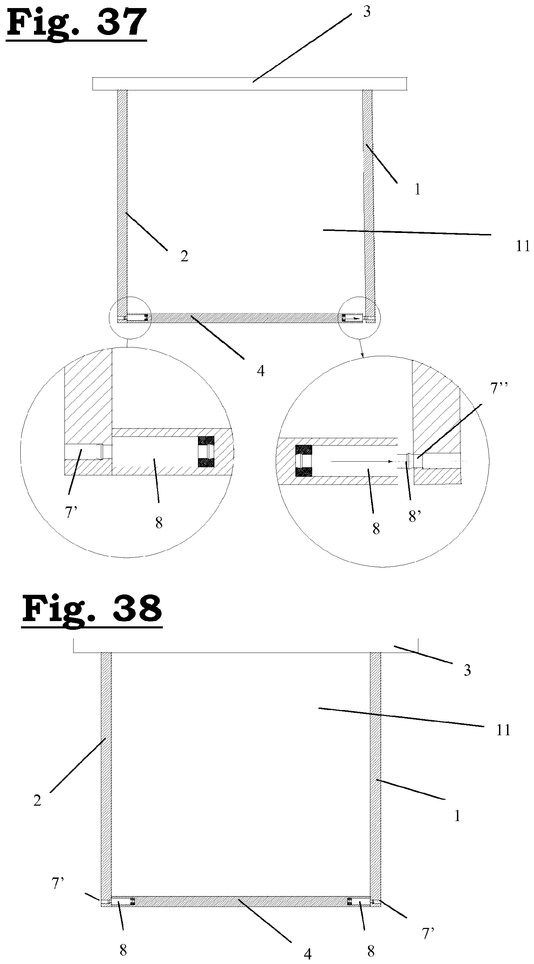

**Fig. 37****:** A drawer box consisting of at least two side panels (1,2), a front (3), a bottom (11) and an intermediate piece or rear piece (4) wherein the rear piece (4) is still to be connected or fitted. The connection of the two side panels (1,2) with the front (3) may be brought about by means of a joint according to the invention, but may, according to this drawing, be brought about in a more traditional manner, such as by an eccentric joint and/or by wooden dowels and glue. In the figure, the longitudinal end opposite the longitudinal end which is connected to the front (3) is provided with at least one continuous drill hole (7) through the thickness of the side piece (1,2). The drill hole (7) is a stepped drill hole consisting of at least two different diameters, with the drill hole (7') ending on the outer side of the drawer box having a larger diameter than the drill hole (7") ending on the inner side of the drawer box. Due to the fact that the drill hole (7) is stepped, a beard is produced at the transition from the one drill hole (7') to the other drill hole (7") which can and will be used to anchor the intermediate piece (4) to the side piece. The drawing shows how, on one side, the intermediate piece (4) is already anchored in the drill hole (7) of the side piece (2). In order to fit the opposite side, the second side piece (1) has to be pulled open slightly, so that the rear piece snaps between the two side pieces and can be fitted. In **Fig. 38**, this drawer is fully assembled.

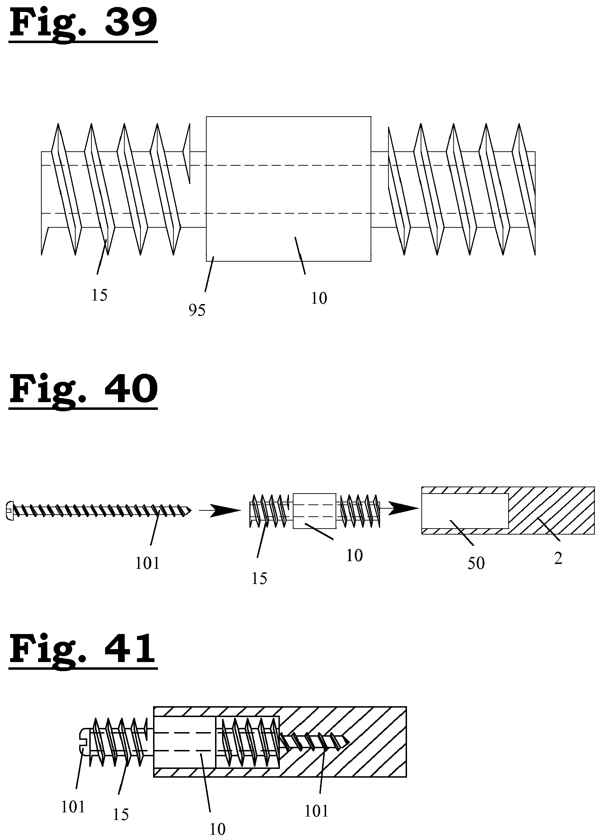

**Fig. 39****:** Screw body (10) according to the invention. The screw body (10) is symmetrical and provided with a screw thread (15) on both sides. In the centre, a stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2) (see Fig. 40).
**Fig. 40****:** Fitting of a screw body (10) according to the invention. The screw body (10) is symmetrical and provided with a screw thread (15) on both sides. In the centre, a stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2).
**Fig. 41****:** Screw body (10) according to the invention which is fitted in a drill hole (50) of the first panel (2). The screw body (10) is symmetrical and provided with a screw thread (15) on both sides. In the centre, a stop (95) is provided which functions to stop screwing the screw body (10) into the front (3), after the surface (V) has been pushed against the side of stop (95). The side of the stop (95) is approximately level with the longitudinal end of the rear piece (4). Normally, a small bit of the side of the stop (95) is inserted in the drill hole (50) of the rear piece (4), as a result of which there will initially be a small tension between the longitudinal end of the first panel (2) and the surface (V) of the second panel (3) during fitting. In the centre, it can be seen that the screw body (10) has a continuous drill hole. This continuous drill hole is necessary in order to accommodate a second screw body (101) so that this can screw down the first screw body (10) into the drill hole (50) of the first panel (2).

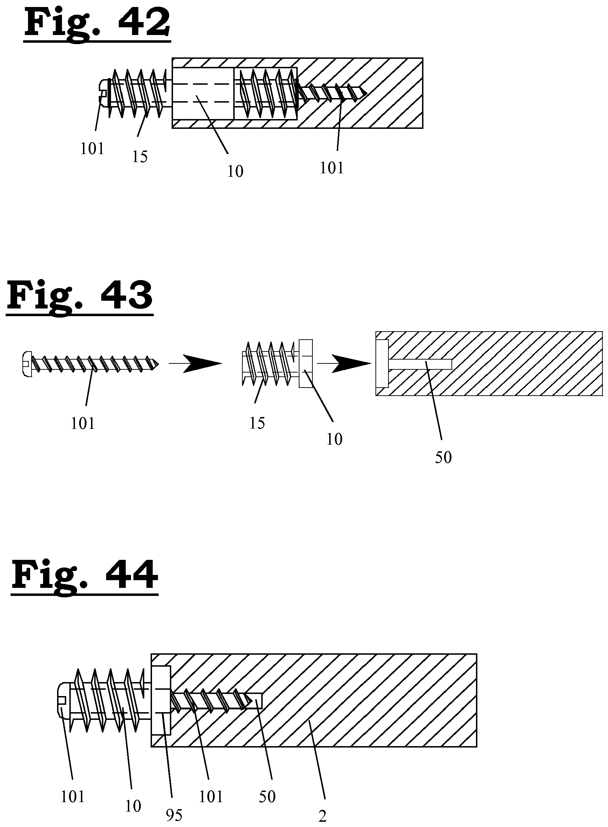

**Fig. 42****:** Screw body (10) according to the invention which is fitted in a drill hole (50) of the first panel (2). The screw body (10) is fitted in the drill hole (50) of the first panel by means of a second screw body (101). As a result thereof, a clamping effect is created on both sides of the screw body (10). It is important for the screw body (10) to be clamped at great tension, since the screw body (10) has to be screwed into the drill hole (14) of the second panel (3), after all. During this fitting or screwing, the clamping stress has to be sufficiently great for the screw body (10) not to start to rotate about the second screw body (101), otherwise it will not be possible to fit or screw into the drill hole (14) of the second panel (3). Only when the side of the stop (95) makes contact with the surface (V) of the second panel (3) may the screwing of the screw body (10) into the drill hole (14) of the second panel (3) be stopped and the screw body (10) may begin to rotate about the second screw body (101). In this way, the screw thread which has been cut in the drill hole (14) of the second panel will not be damaged during fitting of the first panel (2) in the second panel (3), as the tension between the longitudinal end of the first panel (2) and the surface (V) of the second panel cannot increase infinitely.
**Fig. 43****:** Fitting of an alternative screw body (10) according to the invention. The screw body (10) is not symmetrical and only has a screw thread (15) on one side. A stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2).
**Fig. 44****:** Fitting of an alternative screw body (10) according to the invention. The screw body (10) is not symmetrical and only has a screw thread (15) on one side. A stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2). The screw body (10) is fitted in the drill hole (50) of the first panel by means of a second screw body (101). As a result thereof, a clamping effect is created on both sides of the screw body (10). It is important for the screw body (10) to be clamped at great tension, since the screw body (10) has to be screwed into the drill hole (14) of the second panel (3), after all. During this fitting or screwing, the clamping stress has to be sufficiently great for the screw body (10) not to start to rotate about the second screw body (101), otherwise it will not be possible to fit or screw into the drill hole (14) of the second panel (3). Only when the side of the stop (95) makes contact with the surface (V) of the second panel (3) may the screwing of the screw body (10) into the drill hole (14) of the second panel (3) be stopped and the screw body (10) may begin to rotate about the second screw body (101). In this way, the screw thread which has been cut in the drill hole (14) of the second panel will not be damaged during fitting of the first panel (2) in the second panel (3), as the tension between the longitudinal end of the first panel (2) and the surface (V) of the second panel cannot increase infinitely.

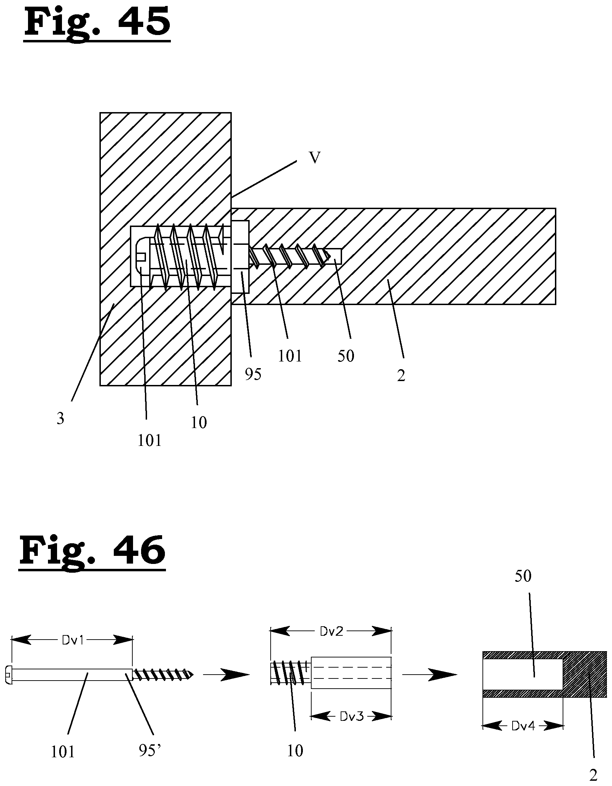

**Fig. 45****:** Fitting of an alternative screw body (10) according to the invention. The screw body (10) is not symmetrical and only has a screw thread (15) on one side. A stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2). The screw body (10) is fitted in the drill hole (50) of the first panel by means of a second screw body (101). As a result thereof, a clamping effect is created on both sides of the screw body (10). It is important for the screw body (10) to be clamped at great tension, since the screw body (10) has to be screwed into the drill hole (14) of the second panel (3), after all. During this fitting or screwing, the clamping stress has to be sufficiently great for the screw body (10) not to start to rotate about the second screw body (101), otherwise it will not be possible to fit or screw into the drill hole (14) of the second panel (3). Only when the side of the stop (95) makes contact with the surface (V) of the second panel (3) may the screwing of the screw body (10) into the drill hole (14) of the second panel (3) be stopped and the screw body (10) may begin to rotate about the second screw body (101). In this way, the screw thread which has been cut in the drill hole (14) of the second panel will not be damaged during fitting of the first panel (2) in the second panel (3), as the tension between the longitudinal end of the first panel (2) and the surface (V) of the second panel cannot increase infinitely.
**Fig. 46****:** Fitting of a screw body (10) according to the invention. The screw body (10) is symmetrical and provided with a screw thread (15) on both sides. In the centre a stop (95) is provided which functions to stop screwing the screw body (10) into the front, after the surface (V) has been pushed against the side of stop (95). The side of the stop (95) is approximately level with the longitudinal end of the rear piece (4). In the centre, it can be seen that the screw body (10) has a continuous drill hole. This continuous drill hole is necessary in order to accommodate a second screw body (101) so that this can screw down the first screw body (10) into the drill hole (50) of the first panel (2). In addition, this second screw body (101) has a stop (95'). This prevents the second screw body (101) from continuing to rotate endlessly during fitting. The length of the stop (Dv1) is equal to or smaller than the length (Dv2) of the screw body (10), so that a tension is applied to the screw body (10) in order to prevent rotation. The depth (Dv4) of the drill hole (50) is equal to or smaller than the length (Dv3) of the stop (95) of the screw body (10). The screw body (10) may, in addition, comprise means on one or both sides ensure resistance during rotation in the other sense from the sense during fitting. As a result thereof, disassembly of the first panel (2) and the second panel (3) is possible.

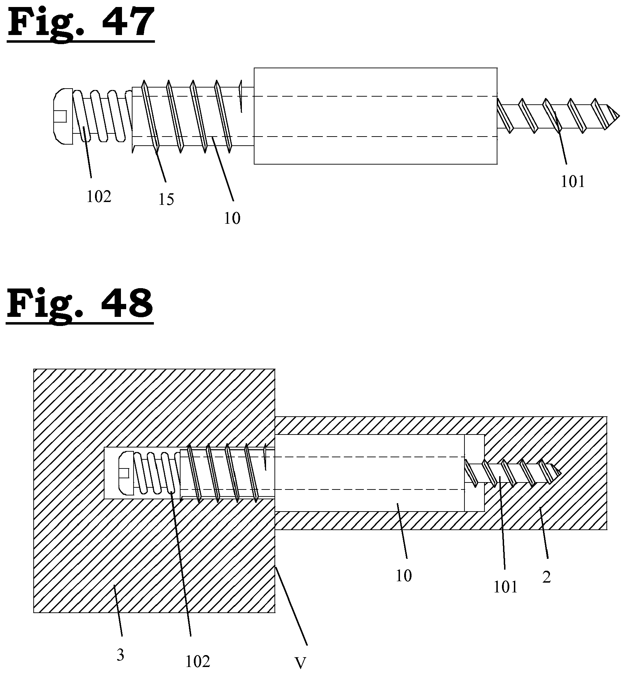

**Fig. 47****:** Screw body (10) according to the invention. The screw body (10) is not symmetrical and is provided with a stop (95) which functions to stop screwing the screw body (10) into the front, after the surface (V) has been pushed against the side of stop (95). The side of the stop (95) will be situated slightly more inwards than the longitudinal end of the first panel (2). It can be seen that the screw body (10) has a continuous drill hole in the longitudinal direction of the screw body (10). This continuous drill hole is necessary in order to accommodate a second screw body (101) so that this can screw down the first screw body (10) into the drill hole (50) of the first panel (2). A spring or resilient material (102) is provided between this second screw body (101) and the screw body (10). This serves for pushing the longitudinal end of the first panel (2) against the surface (V) of the second panel (3) during fitting, the screw body (10).
   A variant of this system is that the rotation is not stopped by the stop (95), but by a positioning mechanism as described in e.g. Figs. 20 and 21.
   It should be understood that various systems of attachment and positioning described in this document may be combined.
**Fig. 48****:** Screw body (10) according to the invention. The screw body (10) is not symmetrical and a stop (95) is provided which functions to stop screwing the screw body (10) into the front, after the surface (V) has been pushed against the side of stop (95). The side of the stop (95) will be situated slightly more inwards than the longitudinal end of the first panel (2). It can be seen that the screw body (10) has a continuous drill hole in the longitudinal direction of the screw body (10). This continuous drill hole is necessary in order to accommodate a second screw body (101) so that this can screw down the first screw body (10) into the drill hole (50) of the first panel (2). A spring or resilient material (102) is provided between this second screw body (101) and the screw body (10). This serves for pushing the longitudinal end of the first panel (2) against the surface (V) of the second panel (3) during fitting, the screw body (10).
   A variant of this system is that the rotation is not stopped by the stop (95), but by a positioning mechanism as described in e.g. Figs. 20 and 21.
   It should be understood that various systems of attachment and positioning described in this document may be combined.

## Claims

1. Set of two panels which are connectable at right angles to each other, wherein at least one longitudinal end of the first panel (2) of at least two drill holes (50 and 51) is provided wherein the one drill hole (50) comprises a screw body (10) which is anchorable or screwable in said drill hole (50), which screw body (10) projects partly from this longitudinal end of which at least the portion which is outside the first panel (2) is provided with a screw thread (15) and the second panel is additionally provided with at least two drill holes (14 and 51) in the surface (V) onto which the first panel (2) is fittable at right angles, and wherein one drill hole (14) of the second panel is provided to accommodate the screw body (10) during fitting so as to be screwable, wherein, in the fitted position, the longitudinal end of the first panel (2) and the surface (V) of the second panel (3) press against each other and the second drill hole (51) of the first panel (2) and the second drill hole (13) of the second panel (3) largely come to lie opposite each other and one or both drill holes (51 or 13) are provided with a positioning body (9) which hooks or couples into the other drill hole (51 or 13) and which largely prevents further turning or rotation of the first panel (2) with respect to the second panel (3), **characterized in that** the screw body (10) is displaceably anchored in the drill hole (50) of the first panel (2), so that a tensile stress (Ft) is applicable to the screw body (10) in the fitted position.

2. Set of two panels according to Claim 1, **characterized in that** the positioning body (9) is provided with a resilient element, as a result of which this is compressible.

3. Set of two panels according to Claims 1 and 2, **characterized in that** the drill hole (14) into which the screw body (10) is to be screwed does not have a screw thread.

4. Set of two panels according to one of the preceding claims, **characterized in that,** in the fitted position, at least the part of the screw body (10) which is situated outside the first panel (2) is displaced towards the second panel (3) on account of the tensile force (Ft).

5. Set of two panels according to one of the preceding claims, **characterized in that** the screw body (10) is displaceably anchored by means of an elastic or flexible adhesive (6).

6. Set of two panels according to one of the preceding claims, **characterized in that** the screw body (10) is screwed into the drill hole (50) of the first panel (2).

7. Set of two panels according to one of the preceding claims, **characterized in that** the end of the screw body (10) makes contact with the end of the drill hole (50) of the first panel (2).

8. Set of two panels according to one of the preceding claims, **characterized in that the** screw body (10) is glued into the drill hole (50) using an adhesive.

9. Set of two panels according to Claim 8, **characterized in that** the adhesive may be a PUR glue, a wood glue, a two-component glue, a hot-melt adhesive, a polyolefin glue.

10. Set of two panels according to one of the preceding claims, **characterized in that,** in the fitted position, the screw thread (15) of the screw body (10) withdraws with respect to the already cut screw thread in the drill hole (14) of the second panel (3) on account of the tensile force (Ft).

11. Set of two panels according to Claim 10, **characterized in that** base material is displaced or pushed away around the drill hole (14) of the second panel during the withdrawal of the screw thread (15) of the screw body (10).

12. Set of two panels according to one of the preceding claims, **characterized in that** the base material of the second panel (3) and/or the first panel (2) may be a chipboard, an MDF panel, an OSB, a multiplex or another wood-based panel.

13. Set of two panels according to one of the preceding claims, **characterized in that** the screw body (10) is made from metal, a metal alloy, a WPC, wood, a plastic or a combination of the aforementioned materials.

14. Set of two panels according to one of the preceding claims, **characterized in that** the positioning body (10) is made from metal, a metal alloy, a WPC, wood, a plastic or a combination of the aforementioned materials.

15. Set of two panels according to one of the preceding claims, **characterized in that** the drill holes (14 and/or 50) are provided with a bevel, chamber or bevel.
